# EUROPÄISCHE PATENTANMELDUNG

(11) **EP 4 803 391 A2**
(43) Veröffentlichungstag der Anmeldung: **09.09.2026**
(21) Anmeldenummer: 26193407.9
(22) Anmeldetag: 06.10.2021
(51) Int. Cl.: B60W 10/08

(54) **FAHRZEUGFÜHRUNGSSYSTEM UND VERFAHREN ZUM BETREIBEN EINER FAHRFUNKTION IN ABHÄNGIGKEIT VON FAHRERDATEN**

(30) Priorität: 12.10.2020 DE 102020126676
(62) Dokumentnummer(n) der früheren Anmeldung(en) nach Art. 76 EPÜ: 21790411.9 / 4 225 619
(71) Anmelder: Bayerische Motoren Werke Aktiengesellschaft, 80809 München (DE)
(72) Erfinder: Yildiz, Muhammed, 85614 Kirchseeon (DE); Dolinaj, Helena, 80636 München (DE); Miller, Martin, 80796 München (DE); Herchet, Frank, 85375 Neufahrn b. Freising (DE); Guenther, Maximilian, 80995 München (DE); Kraemer, Markus, 85221 Dachau (DE); Schulz, Julius, 81547 München (DE); Adiprasito, Bartono, 84184 Tiefenbach (DE)

(57) **Zusammenfassung**

Es wird ein Fahrzeugführungssystem zur Bereitstellung einer Fahrfunktion zur automatisierten Längsführung eines Fahrzeugs an einer Signalisierungseinheit beschrieben, wobei das Fahrzeugführungssystem eingerichtet ist, während des Betriebs der Fahrfunktion, auf Basis von Umfelddaten von ein oder mehreren Umfeldsensoren des Fahrzeugs eine erste Signalisierungseinheit zu detektieren, die auf einer von dem Fahrzeug befahrenen Fahrbahn in Fahrtrichtung vor dem Fahrzeug angeordnet ist, Fahrerdaten in Bezug auf die Aufmerksamkeit des Fahrers des Fahrzeugs bei der Überwachung der Fahrfunktion zu ermitteln, die Fahrfunktion in Bezug auf die automatisierte Längsführung des Fahrzeugs an der ersten Signalisierungseinheit in Abhängigkeit von den Fahrerdaten zu betreiben, und eine Verzögerung und/oder eine Beschleunigung des Fahrzeugs im Rahmen der automatisierten Längsführung des Fahrzeugs an der ersten Signalisierungseinheit in Abhängigkeit von den Fahrerdaten zu bewirken. Das Fahrzeugführungssystem ist ferner eingerichtet, den Zeitpunkt des Beginns einer automatisierten Verzögerung und/oder den Verzögerungswert der automatisierten Verzögerung des Fahrzeugs an der ersten Signalisierungseinheit in Abhängigkeit von den Fahrerdaten festzulegen.

## Beschreibung

Die Erfindung betrifft ein Fahrzeugführungssystem und ein entsprechendes Verfahren zum Betreiben einer Fahrfunktion, insbesondere einer Fahrerassistenzfunktion, eines Fahrzeugs in Zusammenhang mit einer Signalisierungseinheit.

Ein Fahrzeug kann ein oder mehrere Fahrfunktionen aufweisen, die den Fahrer des Fahrzeugs bei der Führung, insbesondere bei der Längsführung, des Fahrzeugs unterstützen. Eine beispielhafte Fahrfunktion zur Unterstützung der Längsführung eines Fahrzeugs ist die Adaptive Cruise Control (ACC) Funktion, die z.B. auf einer Landstraße oder auf einer Autobahn dazu genutzt werden kann, das Fahrzeug mit einer festgelegten Setz- bzw. Soll-Fahrgeschwindigkeit und/oder in einem festgelegten Soll-Abstand zu einem vor dem Fahrzeug fahrenden Vorder-Fahrzeug längszuführen.

Im Stadtbereich trifft ein Fahrzeug bei einer Fahrt auf einer Straße häufig auf Knotenpunkte der von dem Fahrzeug befahrenen Straße mit ein oder mehreren anderen Verkehrswegen (z.B. mit einer anderen Straße, mit einem Fußgängerweg, etc.). An einem Knotenpunkt können eine Lichtsignalanlage und/oder ein Verkehrszeichen (etwa ein Stopp-Schild) angeordnet sein, durch die die Vorfahrt an dem Knotenpunkt geregelt wird. Eine Lichtsignalanlage und/oder ein Verkehrszeichen zur Festlegung der Vorfahrt und/oder der Ein- bzw. Überfahrerlaubnis an einem, in einen oder über einen Knotenpunkt wird in diesem Dokument allgemein als Signalisierungseinheit bezeichnet.

WO 2014/053134 A1 beschreibt ein Verfahren zur Unterstützung eines Fahrers an einer Ampel. US 2019/0139407 A1 beschreibt ein Verfahren zur Warnung eines Fahrers. US 2018/0273047 A1 beschreibt ein Verfahren zur Steuerung des Antriebsmotors eines Fahrzeugs. EP 1 127 727 A2 beschreibt ein Geschwindigkeitsregelsystem für ein Fahrzeug.

Das vorliegende Dokument befasst sich mit der technischen Aufgabe, eine Fahrfunktion, insbesondere eine Fahrerassistenzfunktion, zur automatisierten Längsführung eines Fahrzeugs bereitzustellen, die eingerichtet ist, Signalisierungseinheiten in zuverlässiger und robuster Weise zu berücksichtigen, insbesondere um die Verfügbarkeit und/oder die Sicherheit und/oder den Komfort der Fahrfunktion zu erhöhen.

Die Aufgabe wird durch jeden einzelnen der unabhängigen Ansprüche gelöst. Vorteilhafte Ausführungsformen werden u.a. in den abhängigen Ansprüchen beschrieben. Es wird darauf hingewiesen, dass zusätzliche Merkmale eines von einem unabhängigen Patentanspruch abhängigen Patentanspruchs ohne die Merkmale des unabhängigen Patentanspruchs oder nur in Kombination mit einer Teilmenge der Merkmale des unabhängigen Patentanspruchs eine eigene und von der Kombination sämtlicher Merkmale des unabhängigen Patentanspruchs unabhängige Erfindung bilden können, die zum Gegenstand eines unabhängigen Anspruchs, einer Teilungsanmeldung oder einer Nachanmeldung gemacht werden kann. Dies gilt in gleicher Weise für in der Beschreibung beschriebene technische Lehren, die eine von den Merkmalen der unabhängigen Patentansprüche unabhängige Erfindung bilden können.

Gemäß einem Aspekt wird ein Fahrzeugführungssystem zur Bereitstellung einer Fahrfunktion zur automatisierten Längsführung eines Fahrzeugs beschrieben. Die Fahrfunktion kann insbesondere darauf ausgelegt sein, das Fahrzeug an einer und/oder in Zusammenhang mit einer Signalisierungseinheit automatisiert längszuführen. Dabei kann die Fahrfunktion gemäß SAE-Level 2 ausgebildet sein. Mit anderen Worten, die Fahrfunktion kann ggf. ein automatisiertes Fahren und/oder eine Fahrerunterstützung (in Bezug auf die Längsführung) gemäß SAE-Level 2 bereitstellen. Die Fahrfunktion kann auf die Längsführung des Fahrzeugs beschränkt sein. Die Querführung des Fahrzeugs kann während des Betriebs manuell durch den Fahrer oder durch eine weitere und/oder separate Fahrfunktion bereitgestellt werden (z.B. durch einen Spurhalteassistenten).

Das Fahrzeugführungssystem kann eingerichtet sein, das Fahrzeug gemäß einer Setz- bzw. Soll-Geschwindigkeit und/oder gemäß einem Soll-Abstand zu einem (direkt) vor dem Fahrzeug fahrenden Vorder-Fahrzeug automatisiert längszuführen. Zu diesem Zweck kann das Fahrzeugführungssystem einen Geschwindigkeitsregler bereitstellen, durch den die Ist-Fahrgeschwindigkeit des Fahrzeugs gemäß der Setz- bzw. Soll-Geschwindigkeit eingestellt, insbesondere geregelt, wird. Alternativ oder ergänzend kann ein Abstandsregler bereitgestellt werden, durch den der Ist-Abstand des Fahrzeugs zu dem Vorder-Fahrzeug gemäß dem Soll-Abstand eingestellt, insbesondere geregelt, wird. Wenn kein relevantes Vorder-Fahrzeug vorhanden ist oder wenn das Vorder-Fahrzeug schneller als die Setz- bzw. Soll-Geschwindigkeit fährt, kann die Fahrgeschwindigkeit des Fahrzeugs geregelt werden. Alternativ oder ergänzend, wenn das Vorder-Fahrzeug langsamer als die Setz- bzw. Soll-Geschwindigkeit fährt, kann der Abstand des Fahrzeugs zu dem Vorder-Fahrzeug geregelt werden. Das Fahrzeugführungssystem kann somit eingerichtet sein, eine Adaptive Cruise Control (ACC) Fahrerassistenzfunktion bereitzustellen.

Das Fahrzeug bzw. das Fahrzeugführungssystem können eine Benutzerschnittstelle für eine Interaktion mit einem Nutzer, insbesondere mit dem Fahrer, des Fahrzeugs umfassen. Die Benutzerschnittstelle kann ein oder mehrere Bedienelemente umfassen, die es dem Nutzer ermöglichen, die Setz- bzw. die Soll-Geschwindigkeit und/oder den Soll-Abstand festzulegen. Alternativ oder ergänzend können es die ein oder mehreren Bedienelemente dem Nutzer ermöglichen, eine zuvor festgelegte Setz- und/oder Soll-Geschwindigkeit und/oder einen zuvor festgelegten Soll-Abstand des Fahrzeugs für den Betrieb der Fahrfunktion zu bestätigen. Die ein oder mehreren Bedienelemente können ausgebildet sein, mit einer Hand und/oder mit einem Finger des Fahrers betätigt zu werden. Alternativ oder ergänzend können die ein oder mehreren Bedienelemente an einem Lenkmittel (insbesondere an einem Lenkrad oder an einem Lenkbügel) des Fahrzeugs angeordnet sein.

Ein beispielhaftes Bedienelement (insbesondere ein Plus/Minus-Bedienelement) ist eine Taste und/oder eine Wippe, mit der die Setz- und/oder Soll-Geschwindigkeit bzw. der Soll-Abstand erhöht bzw. reduziert werden kann. Ein weiteres beispielhaftes Bedienelement (insbesondere ein Set-Bedienelement) ist eine Taste, mit der eine aktuelle Fahrgeschwindigkeit des Fahrzeugs als Setz- und/oder Soll-Geschwindigkeit bzw. mit der ein aktueller Abstand des Fahrzeugs zum Vorder-Fahrzeug als Soll-Abstand festgelegt werden kann. Ein weiteres beispielhaftes Bedienelement (insbesondere ein Resume-Bedienelement) ist eine Taste, mit der eine zuvor eingestellte Setz- und/oder Soll-Geschwindigkeit bzw. ein zuvor eingestellter Soll-Abstand erneut bestätigt bzw. reaktiviert werden kann.

Die Benutzerschnittstelle kann ferner ein oder mehrere Ausgabeelemente (z.B. einen Bildschirm und/oder einen Lautsprecher und/oder ein Vibrationselement) umfassen, mit denen Ausgaben an den Nutzer des Fahrzeugs bewirkt werden können.

Des Weiteren kann das Fahrzeugführungssystem eingerichtet sein, ein oder mehrere Signalisierungseinheiten auf der von dem Fahrzeug befahrenen Fahrbahn (insbesondere Straße) und/oder Fahrroute bei der automatisierten Längsführung zu berücksichtigen. Eine Signalisierungseinheit kann dazu vorgesehen sein, die Vorfahrt an einem Knotenpunkt (insbesondere an einer Kreuzung) des von dem Fahrzeug befahrenen Fahrbahnnetzes festzulegen. Die Festlegung der Vorfahrt kann dabei zeitlich veränderbar sein (wie z.B. bei einer Lichtsignalanlage, etwa bei einer Ampelanlage, mit ein oder mehreren unterschiedlichen Signalgruppen für ein oder mehrere unterschiedliche Fahrtrichtungen des Fahrzeugs an dem Knotenpunkt) oder fest vorgegeben sein (wie z.B. bei einem Verkehrszeichen, etwa bei einem Stopp-Schild).

Das Fahrzeugführungssystem kann eingerichtet sein, Daten in Bezug auf eine in Fahrtrichtung des Fahrzeugs vorausliegende Signalisierungseinheit zu ermitteln. Die Daten können Kartendaten in Bezug auf Signalisierungseinheiten in dem von dem Fahrzeug befahrenen Fahrbahnnetz umfassen. Die Kartendaten können jeweils ein oder mehrere Attribute für eine Signalisierungseinheit umfassen. Die ein oder mehreren Attribute für eine Signalisierungseinheit können anzeigen bzw. umfassen:
- einen Typ der Signalisierungseinheit, insbesondere, ob es sich bei der Signalisierungseinheit um eine Lichtsignalanlage oder um ein Verkehrszeichen handelt; und/oder
- eine Anzahl von unterschiedlichen Signalgruppen der Signalisierungseinheit für unterschiedliche Fahrtrichtungen an dem Knotenpunkt des Fahrbahnnetzes, an dem die Signalisierungseinheit angeordnet ist bzw. mit dem die Signalisierungseinheit assoziiert ist; und/oder
- eine Position (z.B. die GPS-Koordinaten) der Signalisierungseinheit und/oder der Haltelinie der Signalisierungseinheit innerhalb des Fahrbahnnetzes; und/oder
- ein relativer Abstand der Haltelinie zu der zugehörigen Signalisierungseinheit.

Das Fahrzeugführungssystem kann eingerichtet sein, unter Verwendung eines Positionssensors (z.B. eines GPS-Empfängers) des Fahrzeugs die Ist-Position (z.B. die aktuellen GPS-Koordinaten) des Fahrzeugs innerhalb des Fahrbahnnetzes zu ermitteln. Anhand der Kartendaten kann dann eine (z.B. die nächste) Signalisierungseinheit auf der Fahrroute des Fahrzeugs erkannt werden. Ferner können ein oder mehrere Attribute in Bezug auf die erkannte Signalisierungseinheit ermittelt werden.

Alternativ oder ergänzend können die Daten in Bezug auf eine in Fahrtrichtung des Fahrzeugs vorausliegende Signalisierungseinheit Umfelddaten in Bezug auf die Signalisierungseinheit umfassen, bzw. basierend auf Umfelddaten ermittelt werden. Die Umfelddaten können von ein oder mehreren Umfeldsensoren des Fahrzeugs erfasst werden. Beispielhafte Umfeldsensoren sind eine Kamera, ein Radarsensor, ein Lidarsensor, etc. Die ein oder mehrere Umfelddaten können eingerichtet sein, Sensordaten (d.h. Umfelddaten) in Bezug auf das Umfeld in Fahrtrichtung vor dem Fahrzeug zu erfassen.

Das Fahrzeugführungssystem kann eingerichtet sein, auf Basis der Umfelddaten (insbesondere auf Basis der Sensordaten einer Kamera) zu erkennen, dass in Fahrtrichtung vor dem Fahrzeug eine Signalisierungseinheit angeordnet ist. Zu diesem Zweck kann z.B. ein Bildanalysealgorithmus verwendet werden. Des Weiteren kann das Fahrzeugführungssystem eingerichtet sein, auf Basis der Umfelddaten den Typ der Signalisierungseinheit (z.B. Lichtsignalanlage oder Verkehrszeichen) zu ermitteln. Ferner kann das Fahrzeugführungssystem eingerichtet sein, auf Basis der Umfelddaten den (Signalisierungs-) Zustand der Signalisierungseinheit in Bezug auf die Erlaubnis für das Überfahren des mit der Signalisierungseinheit assoziierten Knotenpunktes zu ermitteln. Insbesondere können die Farben (Grün, Gelb oder Rot) der ein oder mehreren Signalgruppen einer Lichtsignalanlage ermittelt werden.

Das Fahrzeugführungssystem kann eingerichtet sein, eine erkannte Signalisierungseinheit bei der automatisierten Längsführung des Fahrzeugs zu berücksichtigen. Insbesondere kann das Fahrzeugführungssystem eingerichtet sein, auf Basis der Daten in Bezug auf die erkannte Signalisierungseinheit, insbesondere auf Basis der durch die Daten angezeigten Farbe eines Lichtsignals bzw. einer Signalgruppe der Signalisierungseinheit, zu bestimmen, ob das Fahrzeug an der Signalisierungseinheit, insbesondere an der Haltelinie der Signalisierungseinheit, halten muss oder nicht. Beispielsweise kann erkannt werden, dass das Fahrzeug halten muss, da die für das Fahrzeug relevante Signalgruppe Rot ist. Alternativ kann erkannt werden, dass das Fahrzeug nicht halten muss, da die für das Fahrzeug relevante Signalgruppe Grün ist. In einem weiteren Beispiel kann erkannt werden, dass das Fahrzeug halten muss, da es sich bei der Signalisierungseinheit um ein Stopp-Schild handelt.

Das Fahrzeugführungssystem kann ferner eingerichtet sein, zu bewirken, dass das Fahrzeug automatisiert an der erkannten Signalisierungseinheit angehalten wird, wenn bestimmt wird, dass das Fahrzeug an der Signalisierungseinheit halten muss. Zu diesem Zweck kann ein automatisierter Verzögerungsvorgang (bis in den Stillstand) bewirkt werden. Das Fahrzeug kann dabei automatisiert bis an bzw. bis vor die Haltelinie der Signalisierungseinheit geführt werden. Während des automatisierten Verzögerungsvorgangs können automatisiert durch das Fahrzeugführungssystem ein oder mehrere Radbremsen (z.B. ein oder mehrere Reibbremsen oder ein oder mehrere rekuperierende Bremsen) angesteuert werden, um das Fahrzeug (bis in den Stillstand) abzubremsen. Der zeitliche Verlauf der bewirkten Verzögerung kann dabei von dem verfügbaren Bremsweg bis zu der erkannten Signalisierungseinheit abhängen.

Alternativ oder ergänzend kann das Fahrzeugführungssystem eingerichtet sein, zu bewirken, dass das Fahrzeug automatisiert an der erkannten Signalisierungseinheit vorbei, insbesondere über die Haltelinie der Signalisierungseinheit, längsgeführt wird, wenn bestimmt wird, dass das Fahrzeug nicht an der Signalisierungseinheit halten muss. Dabei kann die Geschwindigkeits- und/oder Abstandsregelung gemäß der Setz- bzw. Soll-Geschwindigkeit und/oder gemäß dem Soll-Abstand zu dem Vorder-Fahrzeug fortgeführt werden.

Das Fahrzeugführungssystem kann somit eingerichtet sein, eine ACC Fahrfunktion unter Berücksichtigung von Signalisierungseinheiten bereitzustellen. Die Fahrfunktion wird in diesem Dokument auch als Urban Cruise Control (UCC) Fahrfunktion bezeichnet.

Wie bereits weiter oben dargelegt, kann das Fahrzeugführungssystem eingerichtet sein, das Fahrzeug im Rahmen der Fahrfunktion automatisiert in Abhängigkeit von einer Soll-Geschwindigkeit und/oder in Abhängigkeit von einem Soll-Abstand zu einem vor dem Fahrzeug fahrenden Vorder-Fahrzeug längszuführen. Ferner kann das Fahrzeugführungssystem eingerichtet sein, wenn eine (ggf. erkannte) Signalisierungseinheit nicht bei der Fahrfunktion berücksichtigt wird, das Fahrzeug automatisiert in Abhängigkeit von der Soll-Geschwindigkeit und/oder in Abhängigkeit von dem Soll-Abstand an der Signalisierungseinheit vorbei, insbesondere über die Haltelinie der Signalisierungseinheit hinaus, längszuführen, insbesondere unabhängig von der Farbe eines Lichtsignals der Signalisierungseinheit. Die Fahrfunktion kann somit (bei Nichtberücksichtigung einer Signalisierungseinheit) ggf. derart betrieben werden, als würde die Signalisierungseinheit (und der damit assoziierte Knotenpunkt) nicht existieren.

Das Fahrzeugführungssystem kann es dem Nutzer des Fahrzeugs ggf. ermöglichen, die Fahrfunktion über die Benutzerschnittstelle zu konfigurieren (z.B. in einem Konfigurationsmenu). Dabei kann ggf. eingestellt werden, ob die Fahrfunktion in einem automatischen Modus betrieben werden soll oder in einem manuellen Modus betrieben werden soll.

In dem automatischen Modus kann die Fahrfunktion derart betrieben werden, dass eine von dem Fahrzeugführungssystem erkannte, in Fahrtrichtung vorausliegende, Signalisierungseinheit automatisch beim Betrieb der Fahrfunktion berücksichtigt wird (und ggf. zu einer automatisierten Verzögerung des Fahrzeugs führt). Insbesondere kann das Fahrzeugführungssystem in dem automatisierten Modus eingerichtet sein, eine auf Basis von Kartendaten und/oder Umfelddaten detektierte Signalisierungseinheit automatisch, insbesondere ohne Bestätigung durch den Nutzer des Fahrzeugs, bei der automatisierten Längsführung des Fahrzeugs zu berücksichtigen (z.B. um bei Bedarf eine automatisierte Verzögerung des Fahrzeugs an der detektierten Signalisierungseinheit zu bewirken).

Andererseits kann die Fahrfunktion im manuellen Modus derart betrieben werden, dass die erkannte Signalisierungseinheit erst nach Bestätigung durch den Nutzer des Fahrzeugs bei der automatisierten Längsführung des Fahrzeugs berücksichtigt wird (und ggf. zu einer automatisierten Verzögerung des Fahrzeugs führt). Insbesondere kann das Fahrzeugführungssystem in dem manuellen Modus eingerichtet sein, (über die Benutzerschnittstelle des Fahrzeugs) ein Angebot in Bezug auf die Berücksichtigung der erkannten Signalisierungseinheit an den Nutzer des Fahrzeugs auszugeben. Beispielsweise kann auf dem Bildschirm angezeigt werden, dass eine Signalisierungseinheit erkannt wurde und dass eine Rückmeldung durch den Nutzer erforderlich ist (um zu bewirken, dass die Signalisierungseinheit bei der automatisierten Längsführung des Fahrzeugs berücksichtigt wird). Die erkannte Signalisierungseinheit (insbesondere der Signalisierungszustand der Signalisierungseinheit) kann dann (insbesondere nur dann) bei der automatisierten Längsführung des Fahrzeugs an der Signalisierungseinheit berücksichtigt werden, wenn das Angebot durch den Nutzer angenommen wird (z.B. durch Betätigung eines Bedienelements, insbesondere des Set-Bedienelements). Es erfolgt dann ggf. eine automatisierte Verzögerung des Fahrzeugs an der erkannten Signalisierungseinheit. Andererseits kann das Fahrzeugführungssystem eingerichtet sein, die erkannte Signalisierungseinheit (insbesondere den Signalisierungszustand der Signalisierungseinheit) bei der automatisierten Längsführung des Fahrzeugs an der Signalisierungseinheit nicht zu berücksichtigen und/oder zu ignorieren, wenn das Angebot nicht durch den Nutzer angenommen wird. In diesem Fall kann die Geschwindigkeits- und/oder Abstandsregelung fortgeführt werden (ohne Berücksichtigung der Signalisierungseinheit, insbesondere so, als wäre die Signalisierungseinheit nicht vorhanden).

Durch die Bereitstellung von unterschiedlichen (einstellbaren) Modi für den Betrieb der Fahrfunktion (insbesondere der UCC Fahrfunktion), kann der Komfort der Fahrfunktion weiter erhöht werden.

Das Fahrzeugführungssystem kann ausgebildet sein, den Nutzer der Fahrfunktion anhand der Benutzerschnittstelle über den Status der Fahrfunktion zu informieren. Insbesondere kann der Nutzer der Fahrfunktion darüber informiert werden, ob eine von dem Fahrzeugführungssystem erkannte, in Fahrtrichtung vorausliegende, Signalisierungseinheit bei dem Betrieb der Fahrfunktion, insbesondere bei der automatisierten Längsführung des Fahrzeugs, berücksichtigt wird oder nicht.

Insbesondere kann das Fahrzeugführungssystem eingerichtet sein, (z.B. auf Basis der Kartendaten und/oder der Umfelddaten) zu bestimmen, ob eine in Fahrtrichtung vorausliegende Signalisierungseinheit bei dem Betrieb der Fahrfunktion berücksichtigt wird bzw. berücksichtigt werden kann oder nicht. Wenn die Signalisierungseinheit berücksichtigt wird bzw. berücksichtigt werden kann, kann ggf. eine Verfügbarkeitsausgabe, insbesondere eine Verftigbarkeitsanzeige, ausgegeben werden, um den Nutzer darüber zu informieren, dass die vorausliegende Signalisierungseinheit bei der automatisierten Längsführung des Fahrzeugs berücksichtigt wird (und somit bei Bedarf eine automatisierte Verzögerung des Fahrzeugs an der Signalisierungseinheit erfolgt).

Alternativ oder ergänzend kann das Fahrzeugführungssystem eingerichtet sein (wenn bestimmt wird, dass die vorausliegende Signalisierungseinheit nicht bei der Fahrfunktion berücksichtigt wird bzw. berücksichtigt werden kann), eine Nichtverfügbarkeitsausgabe, insbesondere eine Nichtverfügbarkeitsanzeige, (über die Benutzerschnittstelle) zu bewirken, um den Nutzer des Fahrzeugs darüber zu informieren, dass die vorausliegende Signalisierungseinheit nicht bei der automatisierten Längsführung des Fahrzeugs berücksichtigt wird (und somit auch keine automatisierte Verzögerung des Fahrzeugs in Abhängigkeit von dem Signalisierungszustand der Signalisierungseinheit bewirkt wird).

Durch die Ausgabe einer Verfügbarkeits- und/oder einer Nichtverfügbarkeitsausgabe können der Komfort und die Sicherheit der Fahrfunktion weiter erhöht werden. Die Verfügbarkeits- und/oder Nichtverfügbarkeitsausgaben können dabei jeweils eine optische, akustische und/oder haptische Ausgabe umfassen.

Das Fahrzeugführungssystem kann eingerichtet sein, zu bestimmen, dass sich der Signalisierungszustand der für die Fahrtrichtung des Fahrzeugs relevanten Signalgruppe der Signalisierungseinheit ändert (z.B., während das Fahrzeug auf die Signalgruppe zuführt, oder während das Fahrzeug an der Signalgruppe steht). Beispielsweise kann erkannt werden, dass ein Phasenwechsel von Rot auf Grün erfolgt.

Des Weiteren kann das Fahrzeugführungssystem eingerichtet sein, (in Reaktion auf den erkannten Phasenwechsel) zu bewirken, dass Information in Bezug auf den geänderten Signalisierungszustand der Signalgruppe der Signalisierungseinheit an den Fahrer des Fahrzeugs vermittelt wird. Beispielsweise kann bewirkt werden, dass über ein Ausgabeelement (insbesondere auf einem Bildschirm) der Benutzerschnittstelle ein Symbol der erkannten (und ggf. bei der automatisierten Längsführung berücksichtigten) Signalisierungseinheit angezeigt wird, solange die Signalgruppe die Farbe Rot aufweist. Nach erkanntem Phasenwechsel auf Grün kann das angezeigte Symbol dann ggf. zurückgenommen werden bzw. es kann die Ausgabe beendet werden. So kann dem Fahrer des Fahrzeugs in zuverlässiger Weise vermittelt werden, dass z.B. nach Stillstand des Fahrzeugs an der Signalisierungseinheit ein (ggf. automatisierter) Anfahrvorgang bewirkt werden kann (z.B. durch Betätigen eines Bedienelements der Benutzerschnittstelle). Die Rücknahme der Anzeige kann dabei einheitlich im automatischen Modus und/oder im manuellen Modus der Fahrfunktion erfolgen.

Das Fahrzeugführungssystem kann eingerichtet sein, eine Übernahmeaufforderung an den Fahrer des Fahrzeugs auszugeben, wenn die Fahrfunktion abgebrochen wird. Beispielsweise kann erkannt werden, dass die automatisierte Längsführung (in Abhängigkeit von der Setz- und/oder Soll-Geschwindigkeit und/oder in Abhängigkeit von dem Soll-Abstand) nicht fortgeführt werden kann oder nicht fortgeführt wird. Ein Abbruch der Fahrfunktion kann z.B. erfolgen, wenn der Fahrer des Fahrzeugs (wesentlich) in die Längsführung des Fahrzeugs eingreift (z.B. indem der Fahrer des Fahrzeugs das Bremspedal oder das Fahrpedal betätigt). Es kann dann eine Übernahmeaufforderung (d.h. ein Take-Over-Request, TOR) an den Fahrer des Fahrzeugs ausgegeben werden. Die Längsführung muss dann wieder von dem Fahrer bewirkt werden. Durch die Ausgabe einer Übernahmeaufforderung kann die Sicherheit des Betriebs des Fahrzeugs erhöht werden.

Alternativ oder ergänzend kann eine Übernahmeaufforderung ausgegeben werden, wenn ein manueller Eingriff des Fahrers in die Längsführung des Fahrzeugs erwartet wird. Beispielsweise kann erkannt werden, dass das Fahrzeugführungssystem die Längsführung nicht mehr automatisch durchführen kann (z.B. um einen bestimmten Zielpunkt, etwa an einer Signalisierungseinheit, zu erreichen). In Reaktion darauf kann dann eine Übernahmeaufforderung an den Fahrer des Fahrzeugs ausgegeben werden.

Wie bereits weiter oben dargelegt, kann das Fahrzeugführungssystem eingerichtet sein, während des Betriebs der Fahrfunktion, auf Basis von Umfelddaten von ein oder mehreren Umfeldsensoren des Fahrzeugs eine erste Signalisierungseinheit zu detektieren, die auf der von dem Fahrzeug befahrenen Fahrbahn in Fahrtrichtung vor dem Fahrzeug angeordnet ist.

Das Fahrzeugführungssystem kann ferner eingerichtet sein, Fahrerdaten in Bezug auf die Aufmerksamkeit des Fahrers des Fahrzeugs bei der Überwachung der Fahrfunktion zu ermitteln. Die Fahrerdaten können anhand von ein oder mehreren Fahrersensoren ermittelt werden. Beispielhafte Fahrersensoren sind eine (auf den Fahrer gerichtete) Kamera und/oder ein Vitalsensor zur Messung von Vitaldaten (etwa dem Puls) des Fahrers. Die Fahrerdaten können den Grad der Aufmerksamkeit des Fahrers anzeigen. Insbesondere kann das Fahrzeugführungssystem eingerichtet sein, auf Basis der Fahrerdaten zu entscheiden, ob der Fahrer ausreichend aufmerksam oder nicht ausreichend aufmerksam bei der Überwachung der Fahrfunktion ist.

Das Fahrzeugführungssystem kann ferner eingerichtet sein, die Fahrfunktion in Bezug auf die automatisierte Längsführung des Fahrzeugs an der ersten Signalisierungseinheit in Abhängigkeit von den Fahrerdaten zu betreiben. Beispielsweise kann die Ausgabe von Information in Bezug auf die erste Signalisierungseinheit in Abhängigkeit von den Fahrerdaten bewirkt oder unterbunden werden. Alternativ oder ergänzend kann der Automatisierungsgrad der Fahrfunktion in Abhängigkeit von den Fahrdaten eingestellt werden.

Beispielsweise kann auf Basis der Fahrerdaten entschieden werden, ob die Fahrfunktion im automatischen Modus oder im manuellen Modus betrieben wird. Durch die Berücksichtigung von Fahrerdaten bei dem Betrieb der Fahrfunktion können die Sicherheit und der Komfort der Fahrfunktion erhöht werden.

Das Fahrzeugführungssystem kann eingerichtet sein, an einem Änderungszeitpunkt, an dem die erste Signalisierungseinheit bereits bei der automatisierten Längsführung des Fahrzeugs berücksichtigt wird, zu bestimmen, dass die Fahrfunktion eine Änderung eines Fahrverhaltens des Fahrzeugs bewirkt oder bewirken möchte. Es können spezifisch Fahrerdaten in Bezug auf den Grad der Aufmerksamkeit des Fahrers bei der Überwachung der Fahrfunktion an dem Änderungszeitpunkt ermittelt werden. Die Fahrerdaten können sich somit auf den Änderungszeitpunkt der Änderung des Fahrverhaltens beziehen. So kann ein Aufmerksamkeits-abhängiger Betrieb der Fahrfunktion in besonders präziser Weise bewirkt werden.

Das Fahrzeugführungssystem kann eingerichtet sein, auf Basis der Umfelddaten zu bestimmen, dass die erste Signalisierungseinheit nicht bei der Fahrfunktion zur automatisierten Längsführung des Fahrzeugs berücksichtigt werden kann (z.B., weil der Signalisierungszustand der für die Fahrtrichtung des Fahrzeugs relevanten Signalgruppe der ersten Signalisierungseinheit nicht oder nur zu spät erkannt werden kann). In Reaktion darauf kann dann eine Nichtverfügbarkeitsausgabe an den Fahrer des Fahrzeugs bewirkt werden, um den Fahrer des Fahrzeugs darüber zu informieren, dass die erste Signalisierungseinheit nicht bei der Fahrfunktion zur automatisierten Längsführung des Fahrzeugs berücksichtigt wird.

Die Nichtverfügbarkeitsausgabe, insbesondere ein oder mehrere Eigenschaften der Nichtverfügbarkeitsausgabe, können dabei von den Fahrerdaten, insbesondere von dem durch die Fahrerdaten angezeigten Grad der Aufmerksamkeit des Fahrers bei der Überwachung der Fahrfunktion, abhängen. In einem bevorzugten Beispiel ist das Fahrzeugführungssystem eingerichtet, (ggf. nur) eine optische Nichtverfügbarkeitsausgabe, insbesondere eine Nichtverfügbarkeitsanzeige, zu bewirken, wenn die Fahrerdaten anzeigen, dass der Grad der Aufmerksamkeit des Fahrers bei der Überwachung der Fahrfunktion größer als ein bestimmter Aufmerksamkeits-Schwellenwert ist. Des Weiteren kann das Fahrzeugführungssystem eingerichtet sein, zusätzlich zu der optischen Nichtverfügbarkeitsausgabe eine akustische und/oder eine haptische Nichtverfügbarkeitsausgabe zu bewirken, wenn die Fahrerdaten anzeigen, dass der Grad der Aufmerksamkeit des Fahrers bei der Überwachung der Fahrfunktion kleiner als der Aufmerksamkeits-Schwellenwert ist.

Die (Anzahl der) Reize des Fahrers des Fahrzeugs, auf die die Nichtverfügbarkeitsausgabe einwirkt, können somit mit sinkendem Grad der Aufmerksamkeit erhöht werden. So können die Sicherheit und der Komfort der Fahrfunktion weiter erhöht werden.

Das Fahrzeugführungssystem kann eingerichtet sein, die optische Nichtverfügbarkeitsausgabe an einem Nichtverfügbarkeitszeitpunkt zu bewirken. Ferner kann auf Basis der Fahrerdaten der Grad der Aufmerksamkeit des Fahrers an dem Nichtverfügbarkeitszeitpunkt ermittelt werden. Es kann dann in besonders zuverlässiger Weise auf Basis des Grads der Aufmerksamkeit des Fahrers an dem Nichtverfügbarkeitszeitpunkt entschieden werden, ob zusätzlich zu der optischen Nichtverfügbarkeitsausgabe auch eine akustische und/oder eine haptische Nichtverfügbarkeitsausgabe bewirkt wird.

Das Fahrzeugführungssystem kann eingerichtet sein, zu bestimmen, dass die Fahrfunktion eine Änderung des Fahrverhaltens des Fahrzeugs in Bezug auf die automatisierte Längsführung des Fahrzeugs an der (erkannten) ersten Signalisierungseinheit bewirkt oder bewirken möchte (bzw. bewirken würde, wenn der Fahrer einen ausreichend hohen Grad an Aufmerksamkeit bei der Überwachung der Fahrfunktion aufweisen würde bzw. aufweist). Die Änderung des Fahrverhaltens kann z.B. den Abbruch einer automatisierten Verzögerung oder einer automatisierten Beschleunigung und/oder den Wechsel von einer automatisierten Verzögerung zu einer automatisierten Beschleunigung (oder umgekehrt) umfassen.

Das Fahrzeugführungssystem kann z.B. eingerichtet sein, auf Basis der Umfelddaten zu bestimmen, dass sich die Farbe einer Signalgruppe der ersten Signalisierungseinheit geändert hat (insbesondere der Signalgruppe, die für die Fahrtrichtung des Fahrzeugs relevant ist). Es kann dann in Reaktion auf den erkannten Farbwechsel bestimmt werden, dass die Fahrfunktion eine Änderung des Fahrverhaltens des Fahrzeugs in Bezug auf die automatisierte Längsführung des Fahrzeugs an der ersten Signalisierungseinheit bewirkt oder bewirken möchte, insbesondere um eine automatisierte Verzögerung an der ersten Signalisierungseinheit zu beenden oder zu beginnen.

Ferner kann das Fahrzeugführungssystem eingerichtet sein, in Abhängigkeit von den Fahrerdaten Information in Bezug auf die Änderung des Fahrverhaltens an den Fahrer des Fahrzeugs auszugeben. Durch die bedingte Ausgabe von Information in Bezug auf die Änderung des Fahrverhaltens des Fahrzeugs können die Sicherheit und der Komfort der Fahrfunktion weiter erhöht werden.

Das Fahrzeugführungssystem kann insbesondere eingerichtet sein, die Information in Bezug auf die Änderung des Fahrverhaltens (ggf. nur dann) an den Fahrer des Fahrzeugs auszugeben, wenn bestimmt wird, dass der Grad der Aufmerksamkeit des Fahrers kleiner als der Aufmerksamkeits-Schwellenwert ist. Bei einem relativ hohen Grad der Aufmerksamkeit (größer als der Aufmerksamkeits-Schwellenwert) kann andererseits auf die Ausgabe der Information verzichtet werden. So kann ein besonders hoher Komfort der Fahrfunktion bewirkt werden.

Das Fahrzeugführungssystem kann eingerichtet sein, auf Basis der Umfelddaten zu bestimmen, dass die Fahrfunktion eine Änderung des Fahrverhaltens des Fahrzeugs in Bezug auf die automatisierte Längsführung des Fahrzeugs an der ersten Signalisierungseinheit bewirken sollte (z.B. um bei einem Farbwechsel von Rot auf Grün von einer automatisierten Verzögerung auf eine automatisierte Beschleunigung zu wechseln, oder auf eine Nullbeschleunigung bzw. auf eine reduzierte Beschleunigung zu wechseln).

Des Weiteren kann das Fahrzeugführungssystem eingerichtet sein, in Abhängigkeit von den Fahrerdaten das Fahrverhalten des Fahrzeugs automatisch zu ändern. Insbesondere kann das Fahrzeugführungssystem eingerichtet sein, das Fahrverhalten (insbesondere nur dann) automatisch zu ändern, wenn bestimmt wird, dass der Grad der Aufmerksamkeit des Fahrers größer als der Aufmerksamkeits-Schwellenwert ist. Wenn der Grad der Aufmerksamkeit des Fahrers kleiner als der Aufmerksamkeits-Schwellenwert ist, erfolgt ggf. keine automatische Änderung des Fahrverhaltens. So kann die Sicherheit der Fahrfunktion weiter erhöht werden.

Das Fahrzeugführungssystem kann eingerichtet sein, die Verzögerung und/oder die Beschleunigung, insbesondere den zeitlichen Verlauf der Verzögerung und/oder der Beschleunigung, des Fahrzeugs im Rahmen der automatisierten Längsführung des Fahrzeugs an der ersten Signalisierungseinheit in Abhängigkeit von den Fahrerdaten (insbesondere in Abhängigkeit von dem Grad der Aufmerksamkeit) zu bewirken und/oder anzupassen. So können die Sicherheit und/oder der Komfort der Fahrfunktion weiter erhöht werden.

Das Fahrzeugführungssystem kann z.B. eingerichtet ist, im Rahmen der automatisierten Längsführung des Fahrzeugs an der ersten Signalisierungseinheit einen zeitlich isolierten Ruck zu bewirken, insbesondere zu Beginn einer automatisierten Verzögerung an der ersten Signalisierungseinheit, wenn die Fahrerdaten anzeigen, dass der Grad der Aufmerksamkeit des Fahrers bei der Überwachung der Fahrfunktion kleiner als der Aufmerksamkeits-Schwellenwert ist. So kann die Aufmerksamkeit des Fahrers in zuverlässiger und komfortabler Weise zurück auf die Überwachung der Fahrfunktion gelenkt werden, sodass die Sicherheit der Fahrfunktion erhöht wird.

Der Ruck kann dabei eine (zeitlich isolierte) Änderung der automatischen Längsführung des Fahrzeugs umfassen. Insbesondere kann automatische von dem Fahrzeug bewirkt werden, dass sich die (Längs-) Beschleunigung bzw. Verzögerung des Fahrzeugs mit der Zeit verändert. Es kann somit eine Änderung der Längsregelung des Fahrzeugs bewirkt werden, die zu einem längsdynamischen Ruck führt, den der Fahrer spüren kann. Der Ruck kann dabei dediziert bewirkt werden, um dem Fahrer ein haptisches Signal zu übermitteln.

Das Fahrzeugführungssystem kann eingerichtet sein, den Zeitpunkt des Beginns einer automatisierten Verzögerung und/oder den Verzögerungswert einer automatisierten Verzögerung des Fahrzeugs an der ersten Signalisierungseinheit in Abhängigkeit von den Fahrerdaten festzulegen. Dabei kann das Fahrzeugführungssystem eingerichtet sein, den Zeitpunkt und/oder den Verzögerungswert derart in Abhängigkeit von den Fahrerdaten zu ermitteln bzw. anzupassen, dass der Zeitpunkt mit steigendem Grad der Aufmerksamkeit des Fahrers bei der Überwachung der Fahrfunktion zeitlich weiter nach hinten verschoben wird, und/oder dass der Verzögerungswert mit steigendem Grad der Aufmerksamkeit des Fahrers bei der Überwachung der Fahrfunktion erhöht wird. Die Dynamik und/oder die Geschwindigkeit und/oder die Dauer von automatischen Eingriffen kann somit in Abhängigkeit von den Fahrerdaten angepasst werden. Insbesondere können die Dynamik und/oder die Geschwindigkeit von automatischen Eingriffen mit steigendem Grad der Aufmerksamkeit des Fahrers erhöht bzw. die Gesamtdauer von automatischen Eingriffen mit steigendem Grad der Aufmerksamkeit des Fahrers reduziert werden. So können der Komfort und die Sicherheit der Fahrfunktion in besonderem Maße erhöht werden.

Gemäß einem weiteren Aspekt wird ein Verfahren zur Bereitstellung einer Fahrfunktion zur automatisierten Längsführung eines Fahrzeugs an einer Signalisierungseinheit beschrieben. Das Verfahren umfasst während des Betriebs der Fahrfunktion das Detektieren, auf Basis von Umfelddaten von ein oder mehreren Umfeldsensoren des Fahrzeugs, einer ersten Signalisierungseinheit, die auf der von dem Fahrzeug befahrenen Fahrbahn in Fahrtrichtung vor dem Fahrzeug angeordnet ist. Des Weiteren umfasst das Verfahren das Ermitteln von Fahrerdaten in Bezug auf die Aufmerksamkeit des Fahrers des Fahrzeugs bei der Überwachung der Fahrfunktion. Das Verfahren umfasst ferner das Betreiben der Fahrfunktion in Bezug auf die automatisierte Längsführung des Fahrzeugs an der ersten Signalisierungseinheit in Abhängigkeit von den Fahrerdaten.

Gemäß einem weiteren Aspekt wird ein (Straßen-) Kraftfahrzeug (insbesondere ein Personenkraftwagen oder ein Lastkraftwagen oder ein Bus oder ein Motorrad) beschrieben, das zumindest eines der in diesem Dokument beschriebenen Fahrzeugführungssysteme umfasst.

Gemäß einem weiteren Aspekt wird ein Software (SW) Programm beschrieben. Das SW Programm kann eingerichtet werden, um auf einem Prozessor (z.B. auf einem Steuergerät eines Fahrzeugs) ausgeführt zu werden, und um dadurch zumindest eines der in diesem Dokument beschriebenen Verfahren auszuführen.

Gemäß einem weiteren Aspekt wird ein Speichermedium beschrieben. Das Speichermedium kann ein SW Programm umfassen, welches eingerichtet ist, um auf einem Prozessor ausgeführt zu werden, und um dadurch zumindest eines der in diesem Dokument beschriebenen Verfahren auszuführen.

Unter dem Begriff "automatisiertes Fahren" kann im Rahmen des Dokuments ein Fahren mit automatisierter Längs- oder Querführung oder ein autonomes Fahren mit automatisierter Längs- und Querführung verstanden werden. Bei dem automatisierten Fahren kann es sich beispielsweise um ein zeitlich längeres Fahren auf der Autobahn oder um ein zeitlich begrenztes Fahren im Rahmen des Einparkens oder Rangierens handeln. Der Begriff "automatisiertes Fahren" umfasst ein automatisiertes Fahren mit einem beliebigen Automatisierungsgrad. Beispielhafte Automatisierungsgrade sind ein assistiertes, teilautomatisiertes, hochautomatisiertes oder vollautomatisiertes Fahren. Diese Automatisierungsgrade wurden von der Bundesanstalt für Straßenwesen (BASt) definiert (siehe BASt-Publikation "Forschung kompakt", Ausgabe 11/2012). Beim assistierten Fahren führt der Fahrer dauerhaft die Längs- oder Querführung aus, während das System die jeweils andere Funktion in gewissen Grenzen übernimmt. Beim teilautomatisierten Fahren (TAF) übernimmt das System die Längs- und Querführung für einen gewissen Zeitraum und/oder in spezifischen Situationen, wobei der Fahrer das System wie beim assistierten Fahren dauerhaft überwachen muss. Beim hochautomatisierten Fahren (HAF) übernimmt das System die Längs- und Querführung für einen gewissen Zeitraum, ohne dass der Fahrer das System dauerhaft überwachen muss; der Fahrer muss aber in einer gewissen Zeit in der Lage sein, die Fahrzeugführung zu übernehmen. Beim vollautomatisierten Fahren (VAF) kann das System für einen spezifischen Anwendungsfall das Fahren in allen Situationen automatisch bewältigen; für diesen Anwendungsfall ist kein Fahrer mehr erforderlich. Die vorstehend genannten vier Automatisierungsgrade entsprechen den SAE-Level 1 bis 4 der Norm SAE J3016 (SAE - Society of Automotive Engineering). Beispielsweise entspricht das hochautomatisierte Fahren (HAF) Level 3 der Norm SAE J3016. Ferner ist in der SAE J3016 noch der SAE-Level 5 als höchster Automatisierungsgrad vorgesehen, der in der Definition der BASt nicht enthalten ist. Der SAE-Level 5 entspricht einem fahrerlosen Fahren, bei dem das System während der ganzen Fahrt alle Situationen wie ein menschlicher Fahrer automatisch bewältigen kann; ein Fahrer ist generell nicht mehr erforderlich. Die in diesem Dokument beschrieben Aspekte betreffen insbesondere eine Fahrfunktion bzw. eine Fahrerassistenzfunktion, die gemäß SAE-Level 2 ausgebildet sind.

Im Weiteren wird die Erfindung anhand von Ausführungsbeispielen näher beschrieben. Dabei zeigen
Figur 1 beispielhafte Komponenten eines Fahrzeugs;
Figur 2a eine beispielhafte Lichtsignalanlage;
Figur 2b ein beispielhaftes Verkehrszeichen;
Figur 3 eine beispielhafte Verkehrssituation;
Figur 4 eine beispielhafte Benutzerschnittstelle; und
Figuren 5a bis 5j sowie Fig. 6 Ablaufdiagramme von beispielhaften Verfahren zur Bereitstellung einer Fahrfunktion zur automatisierten Längsführung eines Fahrzeugs an einer Signalisierungseinheit.

Wie eingangs dargelegt, befasst sich das vorliegende Dokument mit der Erhöhung der Zuverlässigkeit, der Verfügbarkeit und/oder des Komforts einer Fahrfunktion, insbesondere eines Fahrerassistenzsystems, eines Fahrzeugs in Zusammenhang mit einer Signalisierungseinheit an einem Knotenpunkt der von dem Fahrzeug befahrenen Fahrbahn bzw. Straße mit einem anderen Verkehrsweg.

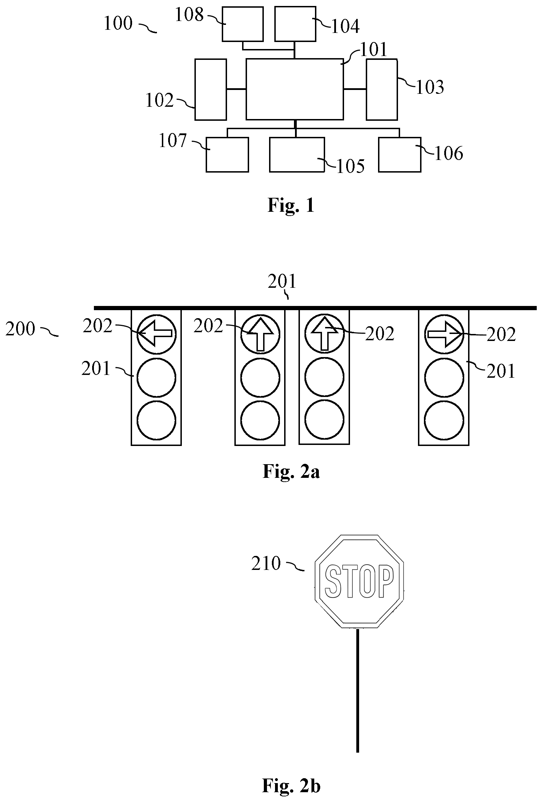

Fig. 1 zeigt beispielhafte Komponenten eines Fahrzeugs 100. Das Fahrzeug 100 umfasst ein oder mehrere Umfeldsensoren 103 (z.B. ein oder mehrere Bildkameras, ein oder mehrere Radarsensoren, ein oder mehrere Lidarsensoren, ein oder mehrere Ultraschallsensoren, etc.), die eingerichtet sind, Umfelddaten in Bezug auf ein Umfeld des Fahrzeugs 100 (insbesondere in Bezug auf das Umfeld in Fahrtrichtung vor dem Fahrzeug 100) zu erfassen. Des Weiteren umfasst das Fahrzeug 100 ein oder mehrere Aktoren 102, die eingerichtet sind, auf die Längs- und/oder die Querführung des Fahrzeugs 100 einzuwirken. Beispielhafte Aktoren 102 sind: eine Bremsanlage, ein Antriebsmotor, eine Lenkung, etc.

Die Steuereinheit 101 kann eingerichtet sein, auf Basis der Sensordaten der ein oder mehreren Umfeldsensoren 103 (d.h. auf Basis der Umfelddaten) eine Fahrfunktion, insbesondere eine Fahrerassistenzfunktion, bereitzustellen. Beispielweise kann auf Basis der Sensordaten ein Hindernis auf der Fahrtrajektorie des Fahrzeugs 100 erkannt werden. Die Steuereinheit 101 kann daraufhin ein oder mehrere Aktoren 102 (z.B. die Bremsanlage) ansteuern, um das Fahrzeug 100 automatisiert zu verzögern und dadurch eine Kollision des Fahrzeugs 100 mit dem Hindernis zu verhindern.

Insbesondere im Rahmen der automatisierten Längsführung eines Fahrzeugs 100 können neben einem Vorder-Fahrzeug ein oder mehrere Signalisierungseinheiten (z.B. eine Lichtsignalanlage und/oder ein Verkehrszeichen) auf der von dem Fahrzeug 100 befahrenen Fahrbahn bzw. Straße berücksichtigt werden. Dabei kann insbesondere der Status einer Lichtsignal- bzw. Ampelanlage berücksichtigt werden, so dass das Fahrzeug 100 automatisiert an einer für die eigene (geplante) Fahrtrichtung relevanten roten Ampel eine Verzögerung bis zu der Haltelinie der Ampel bewirkt und/oder bei einer grünen Ampel (ggf. wieder) beschleunigt.

Lichtsignalanlagen können in unterschiedlichen Ländern sehr heterogen konstruiert sein und zudem unterschiedlich komplex bezüglich der Fahrtrichtungs-Lichtsignal-Zuordnung sein. So können verschiedene Fahrtrichtungen gebündelt durch eine erste Gruppe von Signalen bzw. durch eine Signalgruppe geregelt sein und eine andere Richtung kann durch eine andere Signalgruppe geregelt sein. Die sich wiederholenden Signale einer Signalgruppe können darüber hinaus geografisch an verschiedenen Stellen einer Kreuzung verortet sein. Es kann daher für eine Steuereinheit 101 (in diesem Dokument auch als Fahrzeugführungssystem bezeichnet) schwierig sein, auf Basis der Sensordaten zu erkennen, welche ein oder mehreren Signale einer Lichtsignalanlage an einer Kreuzung für die geplante Fahrtrichtung des Fahrzeugs 100 relevant sind und welche nicht (insbesondere wenn das Fahrzeug 100 noch relativ weit von der Lichtsignalanlage entfernt ist).

Fig. 2a zeigt eine beispielhafte Lichtsignalanlage 200. Die in Fig. 2a dargestellte Lichtsignalanlage 200 weist vier unterschiedliche Signalgeber 201 auf, die an unterschiedlichen Positionen an einer Zufahrt zu einer Kreuzung angeordnet sind. Der linke Signalgeber 201 weist einen Pfeil 202 nach links auf, und zeigt damit an, dass dieser Signalgeber 201 für Linksabbieger gilt. Die beiden mittleren Signalgeber 201 weisen einen Pfeil 202 nach oben (oder keinen Pfeil 202) auf und zeigen damit an, dass diese beiden Signalgeber 201 für eine Geradeausfahrt gelten. Die einzelnen Lichtzeichen dieser beiden Signalgeber 201 bilden Signalgruppen. Des Weiteren weist der rechte Signalgeber 201 einen Pfeil 202 nach rechts auf, und zeigt damit an, dass dieser Signalgeber 201 für Rechtsabbieger gilt.

Die in Fig. 2a dargestellte Lichtsignalanlage 200 ist nur ein Beispiel für viele unterschiedliche mögliche Ausgestaltungen einer Lichtsignalanlage 200. Eine Lichtsignalanlage 200 kann eine relativ große Anzahl von unterschiedlichen Ausprägungen von Merkmalen aufweisen. Beispielhafte Merkmale sind,
- die Anzahl von Signalgebern 201 und/oder von Signalgruppen;
- die Positionen der ein oder mehreren Signalgeber 201; und/oder
- die Zuordnung eines Signalgebers 201 zu einer möglichen Fahrtrichtung über eine Kreuzung.

Fig. 2b zeigt ein beispielhaftes Stopp-Schild als Verkehrszeichen 210, durch das die Vorfahrt an einem Verkehrs-Knotenpunkt, insbesondere an einer Kreuzung, geregelt wird. Die Steuereinheit 101 des Fahrzeugs 100 kann eingerichtet sein, auf Basis der Sensordaten der ein oder mehreren Umfeldsensoren 103 (d.h. auf Basis der Umfelddaten) und/oder auf Basis von digitaler Karteninformation (d.h. von Kartendaten) ein für die Vorfahrt des Fahrzeugs 100 relevantes Verkehrszeichen 210 auf der von dem Fahrzeug 100 befahrenen Straße bzw. Fahrbahn zu erkennen.

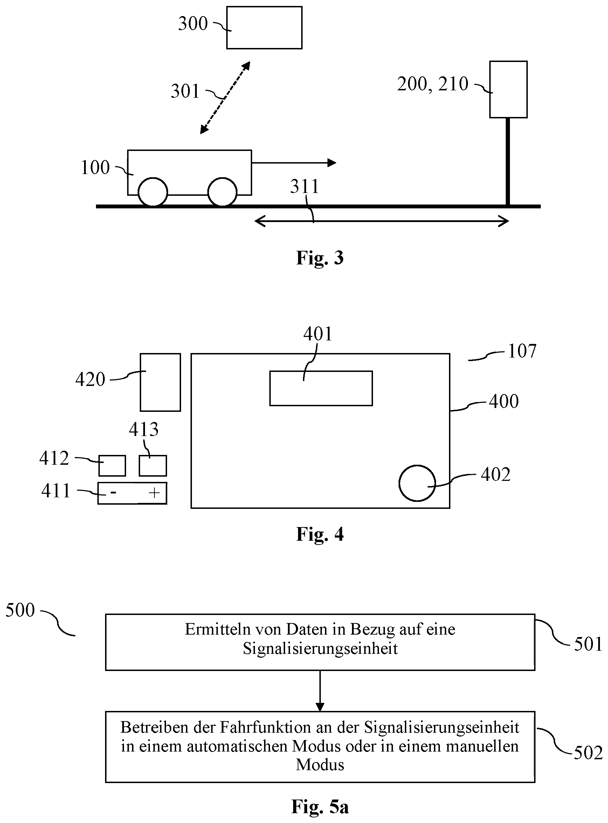

Fig. 3 zeigt beispielhaft ein Fahrzeug 100, das sich auf einer Fahrbahn auf eine Signalisierungseinheit 200, 210 (insbesondere auf eine Lichtsignalanlage 200 und/oder auf ein Verkehrszeichnen 210) zubewegt. Die ein oder mehreren Umfeldsensoren 103 des Fahrzeugs 100 können eingerichtet sein, Sensordaten (insbesondere Bilddaten) in Bezug auf die Signalisierungseinheit 200, 210 zu erfassen. Die Sensordaten können dann analysiert werden (z.B. mittels eines Bildanalysealgorithmus), um Ausprägungen von ein oder mehreren Merkmalen der Signalisierungseinheit 200, 210 zu ermitteln. Insbesondere kann auf Basis der Sensordaten ermittelt werden, ob es sich bei der Signalisierungseinheit 200, 210 um eine Lichtsignalanlage 200 oder um ein Verkehrszeichen 210 handelt. Ferner kann ermittelt werden, welcher Signalgeber 201 der Lichtsignalanlage 200 für die (geplante) Fahrtrichtung des Fahrzeugs 100 relevant ist. Des Weiteren kann der (Signalisierungs-) Zustand des relevanten Signalgebers 201 (z.B. die Farbe, etwa Rot, Gelb oder Grün) ermittelt werden.

Die Güte und/oder die Zuverlässigkeit, mit der auf Basis der Umfelddaten die Ausprägung eines Merkmals einer Signalisierungseinheit 200, 210 ermittelt werden kann, hängen typischerweise von der Entfernung 311 des Fahrzeugs 100 zu der Signalisierungseinheit 200, 210 ab. Des Weiteren haben auch aktuelle Witterungsverhältnisse typischerweise einen wesentlichen Einfluss auf die Güte und/oder die Zuverlässigkeit der ermittelten Ausprägung eines Merkmals. Außerdem können die Güte und/oder Zuverlässigkeit für unterschiedliche Merkmale unterschiedlich sein.

Das Fahrzeug 100 kann eine Speichereinheit 104 aufweisen, auf der digitale Karteninformation (d.h. Kartendaten) bezüglich des von dem Fahrzeug 100 befahrenen Straßennetzes gespeichert ist. Die Kartendaten können als Attribute Ausprägungen von ein oder mehreren Merkmalen von ein oder mehreren Signalisierungseinheiten 200, 210 in dem Straßennetz anzeigen. Insbesondere können die Kartendaten für eine Lichtsignalanlage 200 die Zuordnung der ein oder mehreren Signalgeber 201 bzw. Signalgruppen 201 zu unterschiedlichen möglichen Fahrtrichtungen anzeigen. Mit anderen Worten, die Kartendaten können anzeigen, welcher Signalgeber bzw. welche Signalgruppe 201 für die Freigabe von welcher Fahrtrichtung zuständig ist. Die Kartendaten können ggf. mittels einer Kommunikationseinheit 105 des Fahrzeugs 100 über eine drahtlose Kommunikationsverbindung (z.B. einer WLAN- oder einer LTE-Kommunikationsverbindung) an dem Fahrzeug 100 empfangen werden.

Die Steuereinheit 101 des Fahrzeugs 100 kann eingerichtet sein (z.B. auf Basis der aktuellen Position des Fahrzeugs 100 und auf Basis einer geplanten Fahrroute und/oder auf Basis der Umfelddaten der ein oder mehreren Umfeldsensoren 103), zu ermitteln, dass das Fahrzeug 100 auf eine vorausliegende Signalisierungseinheit 200, 210 zufährt. Des Weiteren kann die Steuereinheit 101 auf Basis der (gespeicherten und/oder empfangenen) Kartendaten die Ausprägungen von ein oder mehreren Merkmalen der vorausliegenden Signalisierungseinheit 200, 210 ermitteln. Insbesondere kann auf Basis der Kartendaten ermittelt werden, welcher Signalgeber bzw. welche Signalgruppe 201 einer Lichtsignalanlage 200 der aktuellen bzw. geplanten Fahrtrichtung des Fahrzeugs 100 zugeordnet ist. Außerdem kann auf Basis der Umfelddaten der aktuelle Status des zugeordneten Signalgebers bzw. der zugeordneten Signalgruppe 201 ermittelt werden. Basierend darauf kann dann in zuverlässiger und komfortabler Weise eine automatisierte Fahrfunktion (z.B. eine automatisierte Längsführung des Fahrzeugs 100) ausgeführt werden. Insbesondere können durch die Berücksichtigung der Kartendaten die Ausprägungen der ein oder mehreren relevanten Merkmale einer Signalisierungseinheit 200 bereits bei einer relativ großen Entfernung 311 des Fahrzeugs 100 zu der Signalisierungseinheit 200 ermittelt werden, wodurch die Zuverlässigkeit, der Verfügbarkeit und der Komfort einer automatisierten Fahrfunktion erhöht werden können.

Ein Fahrzeug 100 kann eingerichtet sein, Information in Bezug auf eine Signalisierungseinheit 200, 210, die von dem Fahrzeug 100 passiert wird oder wurde, dazu zu nutzen, die Kartendaten zu erstellen und/oder zu ergänzen. Die Kartendaten können lokal durch das Fahrzeug 100 und/oder zentral durch eine Zentraleinheit 300 (z.B. durch einen Backend-Server) erstellt und/oder ergänzt werden (siehe Fig. 3). In unmittelbarer Nähe zu einer Signalisierungseinheit 200, 210 können durch die ein oder mehreren Umfeldsensoren 103 eines Fahrzeugs 100 typischerweise Umfelddaten erfasst werden, die in präziser Weise die Ausprägung von ein oder mehreren Merkmalen der Signalisierungseinheit 200, 210 anzeigen. Insbesondere kann in unmittelbarer Nähe auf Basis der erfassten Umfelddaten in präziser und zuverlässiger Weise die Zuordnung zwischen Signalgebern bzw. Signalgruppen 201 und möglichen Fahrtrichtungen bestimmt werden.

Das Fahrzeug 100 kann eingerichtet sein, die ermittelte Information (z.B. die Umfelddaten und/oder die ermittelten Ausprägungen der ein oder mehreren Merkmale) über eine drahtlose Kommunikationsverbindung 301 an die Zentraleinheit 300 zu übermitteln (in Zusammenhang mit einem Identifikator für die jeweilige Signalisierungseinheit 200, 210, etwa in Zusammenhang mit der Position der Signalisierungseinheit 200, 210). Die Zentraleinheit 300 kann dann auf Basis der bereitgestellten Information einer Vielzahl von Fahrzeugen 100 Kartendaten erstellen und/oder aktualisieren, die für eine Vielzahl von unterschiedlichen Signalisierungseinheiten 200, 210 jeweils als Attribute die Ausprägungen von ein oder mehreren Merkmalen anzeigt. Die Kartendaten können dann den einzelnen Fahrzeugen 100 bereitgestellt werden, um (wie oben dargelegt) den Betrieb einer automatisierten Fahrfunktion zu unterstützen.

Das Fahrzeug 100 umfasst typischerweise eine Benutzerschnittstelle 107 mit ein oder mehreren Bedienelementen und/oder mit ein oder mehreren Ausgabeelemente. Fig. 4 zeigt eine beispielhafte Benutzerschnittstelle 107 mit einer Anzeigeeinheit 400, insbesondere mit einem Bildschirm, zur Ausgabe von optischer Information. Auf der Anzeigeeinheit 400 kann z.B. über ein Anzeigeelement 401 ein Vorschlag für das automatische Führen des Fahrzeugs 100 an einer vorausliegenden Signalisierungseinheit 200, 210 ausgegeben werden. Alternativ oder ergänzend kann ggf. ein Anzeigeelement 402 bereitgestellt werden, über das der Status der Fahrfunktion (z.B. aktiv oder inaktiv) dargestellt wird.

Alternativ oder ergänzend kann die Benutzerschnittstelle 107 als Ausgabeelement zumindest einen Lautsprecher 420 umfassen, über den eine akustische Ausgabe (z.B. ein Warnton) an den Fahrer des Fahrzeugs 100 ausgegeben werden kann.

Des Weiteren kann die Benutzerschnittstelle 107 ein oder mehrere Bedienelemente 411, 412, 413 umfassen, die es dem Fahrer des Fahrzeugs 100 ermöglichen, die Fahrfunktion zu aktiveren und/oder zu parametrieren. Ein beispielhaftes Bedienelement ist eine Wippe 411, die es dem Fahrer ermöglicht, eine Setzgeschwindigkeit (d.h. eine Soll-Fahrgeschwindigkeit) für das Fahrzeug 100 festzulegen, insbesondere zu erhöhen oder zu reduzieren. Ein weiteres beispielhaftes Bedienelement ist ein Set-Bedienelement 412, das es dem Fahrer ermöglicht, die aktuelle Fahrgeschwindigkeit als Setzgeschwindigkeit festzulegen, und/oder einen Vorschlag für das automatische Führen des Fahrzeugs 100 an einer vorausliegenden Signalisierungseinheit 200, 210 anzunehmen. Ferner kann die Benutzerschnittstelle 107 ein Resume-Bedienelement 413 umfassen, das es dem Fahrer z.B. ermöglicht, die Fahrfunktion mit einer zuvor festgelegten Setzgeschwindigkeit zu reaktivieren.

Die Steuereinheit 101 des Fahrzeugs 100 kann ausgebildet sein, eine automatisierte Längsführung des Fahrzeugs 100 im Stadtbereich bereitzustellen. Diese Fahrfunktion kann z.B. als Urban Cruise Control (UCC) Fahrfunktion bezeichnet werden. Die Fahrfunktion kann dabei in einem automatischen Modus (aUCC) und/oder in einem manuellen Modus (mUCC) bereitgestellt werden. Dabei kann es dem Fahrer ggf. ermöglicht werden, über die Benutzerschnittstelle 107 festzulegen, ob die Fahrfunktion in dem automatischen oder in dem manuellen Modus betrieben werden soll.

Die Steuereinheit 101 des Fahrzeugs 100 kann eingerichtet sein, auf Basis der Umfelddaten der ein oder mehreren Umfeldsensoren 103 und/oder auf Basis der Kartendaten (in Zusammenhang mit den Positionsdaten des Positionssensors 106 des Fahrzeugs 100) eine auf der Fahrroute des Fahrzeugs 100 vorausliegende Signalisierungseinheit 200, 210 zu detektieren. Im manuellen Modus der UCC-Fahrfunktion kann dann ein Vorschlag bzw. eine Anfrage dahingehend über die Benutzerschnittstelle 107 ausgegeben werden, ob die Signalisierungseinheit 200, 210 bei der automatisierten Längsführung des Fahrzeugs 100 berücksichtigt werden soll oder nicht. Der Fahrer des Fahrzeugs 100 kann dann, z.B. durch Betätigen des Set-Bedienelements 412, den Verschlag annehmen oder ablehnen bzw. ignorieren. Andererseits kann im automatischen Modus der UCC-Fahrfunktion die erkannte Signalisierungseinheit 200, 210 ggf. automatisch (d.h. ohne erforderliche Rückmeldung von dem Fahrer) bei der automatisierten Längsführung des Fahrzeugs 100 berücksichtigt werden.

Wenn die erkannte Signalisierungseinheit 200, 210 bei der automatisierten Längsführung des Fahrzeugs 100 berücksichtigt wird, so kann (je nach Typ und/oder (Signalisierungs-) Zustand der Signalisierungseinheit 200, 210) eine automatische Verzögerung bewirkt werden, um das Fahrzeug 100 (z.B. bei einer roten Ampel oder bei einem Stopp-Schild) automatisiert in den Stillstand zu überführen. Ferner kann (z.B. nach Änderung des (Signalisierungs-) Zustands der Signalisierungseinheit 200, 210, etwa nach einem Wechsel auf Grün) ein automatisches Anfahren des Fahrzeugs 100 bewirkt werden. Das Fahrzeug 100 kann dann wieder automatisiert auf die Setzgeschwindigkeit beschleunigt werden (unter Berücksichtigung eines festgelegten Mindest- bzw. Soll-Abstands zu einem Vorder-Fahrzeug).

Mit der UCC-Fahrfunktion kann es somit dem Fahrer eines Fahrzeugs 100 ermöglicht werden, die ACC-Fahrfunktion auch auf einer Straße mit ein oder mehreren Signalisierungseinheiten 200, 210 zu nutzen (ohne die ACC-Funktion an den einzelnen Signalisierungseinheiten 200, 210 jeweils deaktivieren und reaktivieren zu müssen).

Die Steuereinheit 101 kann eingerichtet sein, auf Basis der Umfelddaten und/oder auf Basis der Kartendaten zu bestimmen, ob eine vorausliegende Signalisierungseinheit 200, 210 bei der automatisierten Längsführung berücksichtigt werden kann oder nicht. Wenn bestimmt wird, dass die vorausliegende Signalisierungseinheit 200, 210 nicht bei der automatisierten Längsführung berücksichtigt werden kann, so kann eine Ausgabe (z.B. eine optische Ausgabe über eine Anzeigeeinheit 400, 402) an den Fahrer des Fahrzeugs 100 bewirkt werden, um den Fahrer des Fahrzeugs 100 darüber zu informieren, dass die vorausliegende Signalisierungseinheit 200, 210 nicht bei der automatisierten Längsführung berücksichtigt werden kann. Diese Anzeige kann als "Nichtverfügbarkeitsanzeige" bezeichnet werden. Es ist dann Aufgabe des Fahrers des Fahrzeugs 100, das Fahrzeug 100 bei Bedarf vor der Signalisierungseinheit 200, 210 zu verzögern (z.B., weil die Ampel auf Rot umschaltet, oder weil es sich bei der Signalisierungseinheit 200, 210 um ein Stopp-Schild handelt).

Des Weiteren kann die Steuereinheit 101 eingerichtet sein, während des Betriebs der UCC-Fahrfunktion zu erkennen, dass das Fahrzeug 100 nicht (mehr) automatisiert längsgeführt werden kann (z.B., weil ein manueller Eingriff des Fahrers in die Längsführung des Fahrzeugs 100 erfolgt ist). In diesem Fall kann eine Übernahmeaufforderung (d.h. ein Take over Request, TOR) an den Fahrer des Fahrzeugs 100 ausgegeben werden, um den Fahrer zu veranlassen, die Längsführung des Fahrzeugs 100 manuell zu übernehmen.

Das Fahrzeug 100 kann ein oder mehrere Fahrersensoren 108 umfassen, die eingerichtet sind, Sensordaten in Bezug auf den Fahrer des Fahrzeugs 100 zu erfassen (diese Sensordaten werden in diesem Dokument auch als Fahrerdaten bezeichnet). Ein beispielhafter Fahrersensor 108 ist eine auf die Fahrerposition des Fahrzeugs 100 gerichtete Kamera. Die Steuereinheit 101 kann eingerichtet sein, auf Basis der Fahrerdaten zu bestimmen, ob der Fahrer eine ausreichend hohe Aufmerksamkeit in Bezug auf die Fahraufgabe bzw. in Bezug auf die Überwachung der Fahrfunktion aufweist oder nicht. Alternativ oder ergänzend kann der Grad der Aufmerksamkeit des Fahrers in Bezug auf die Fahraufgabe bzw. in Bezug auf die Überwachung der Fahrfunktion ermittelt werden. Des Weiteren kann die Steuereinheit 101 eingerichtet sein, die Fahrfunktion, insbesondere die UCC-Fahrfunktion, in Abhängigkeit von dem ermittelten Grad der Aufmerksamkeit des Fahrers zu betreiben. So können der Komfort und die Sicherheit des Fahrfunktion weiter erhöht werden.

Wie bereits oben dargelegt, kann die Steuereinheit 101 eingerichtet sein, eine vorausliegende Signalisierungseinheit 200, 210 auf Basis von Kartendaten (in Zusammenhang mit Positionsdaten in Bezug auf die aktuelle Position des Fahrzeugs 100) zu erkennen bzw. zu detektieren. Ferner kann die Steuereinheit 101 eingerichtet sein, die vorausliegende Signalisierungseinheit 200, 210 auf Basis von Umfelddaten von ein oder mehreren Umfeldsensoren 103 (insbesondere von einer Kamera) des Fahrzeugs 100 zu erkennen bzw. zu detektieren. Die automatisierte (UCC-) Fahrfunktion kann an der erkannten Signalisierungseinheit 200, 210 in Abhängigkeit davon betrieben werden,
- ob die Signalisierungseinheit 200, 210 auf Basis der Kartendaten und/oder auf Basis der Umfelddaten erkannt wurde;
- an bzw. ab welchem Erkennungszeitpunkt die Signalisierungseinheit 200, 210 auf Basis der Kartendaten bzw. auf Basis der Umfelddaten erkannt wurde; und/oder
- an welchem Konfigurationszeitpunkt eine Konfigurationsänderung der UCC-Fahrfunktion (z.B. zwischen dem automatischen Modus und dem manuellen Modus) relativ zu dem Erkennungszeitpunkt der Signalisierungseinheit 200, 210 vorgenommen wurde.

Insbesondere kann die Steuereinheit 101 eingerichtet sein, den Fahrer über die Nichtverfügbarkeit der automatisierten Unterstützung der Längsführung an der erkannten Signalisierungseinheit 200, 210 zu informieren (z.B. durch eine optische, eine haptische und/oder eine akustische Ausgabe über die Benutzerschnittstelle 107), wenn die Signalisierungseinheit 200, 210 nur auf Basis der Umfelddaten, aber nicht auf Basis der Kartendaten erkannt wurde.

Die Steuereinheit 101 kann somit eingerichtet sein, eine automatisierte Unterstützung der Längsführung an der erkannten Signalisierungseinheit 200, 210 ggf. nur dann anzubieten und/oder bereitzustellen, wenn die Signalisierungseinheit 200, 210 nicht nur anhand von Umfelddaten sondern auch anhand von Kartendaten erkannt wird. Wenn die automatisierte Unterstützung der Längsführung an der erkannten Signalisierungseinheit 200, 210 nicht bereitgestellt werden kann, kann der Fahrer über die Benutzerschnittstelle 107 über die Nichtverfügbarkeit der automatisierten Unterstützung informiert werden (durch eine Nichtverfügbarkeitsausgabe). So kann ein sicherer Betrieb der UCC Fahrfunktion ermöglicht werden. Insbesondere kann so zuverlässig vermieden werden, dass die Haltelinie einer erkannten Signalisierungseinheit 200, 210 in unzulässiger Weise überfahren wird, weil der Fahrer fälschlicher Weise davon ausgeht, bei der Längsführung an der erkannten Signalisierungseinheit 200, 210 unterstützt zu werden.

Bei einer Signalisierungseinheit 200, insbesondere bei einer Lichtsignalanlage 200, mit mehreren Signalgruppen 201 kann häufig nicht zuverlässig erkannt werden, welche Ampelfarbe für das Fahrzeug 100 relevant ist. Eine Signalgruppe 201 kann dabei alle gleichgeschalteten Ampeln bzw. Signalgeber einer Lichtsignalanlage 200 umfassen. An einer Kreuzung mit separat geschalteten Ampeln für Linksabbieger einerseits und für Geradeausfahrt bzw. Rechtsabbieger andererseits liegt somit eine Zufahrt mit zwei unterschiedlichen Signalgruppen 201 vor.

Die Steuereinheit 101 kann eingerichtet sein, den automatischen Modus der UCC Fahrfunktion, d.h. aUCC, ggf. nur an einer Lichtsignalanlage 200 mit einer einzigen Signalgruppe 201 bereitzustellen. An einer Lichtsignalanlage 200 mit mehreren unterschiedlichen Signalgruppen 201 kann dahingehen der manuelle Modus der UCC Fahrfunktion, d.h. mUCC, bereitgestellt werden. In diesem Fall erhält der Fahrer über die Benutzerschnittstelle 107 einen Vorschlag zur Unterstützung bei der Längsführung, die der Fahrer dann ggf. durch Betätigen eines Bedienelements 412 der Benutzerschnittstelle 107 annehmen kann (was z.B. zu einer automatisierten Bremsung an einer roten Signalgruppe 201 führt).

Damit die Fahrfunktion bei der Zufahrt auf eine Lichtsignalanlage 200 weiß, wie viele unterschiedliche Signalgruppen 201 die Lichtsignalanlage 200 aufweist und mit welcher Funktionsausprägung (aUCC oder mUCC) auf die Lichtsignalanlage 200 reagiert werden kann, kann die Anzahl der Signalgruppen 201 als Kartenattribut in den Kartendaten (d.h. in der digitalen Karteninformation) hinterlegt sein. Da diese Kartendaten in Einzelfällen fehlerhaft sein können oder sich die Anzahl der Signalgruppen 201 durch Umbaumaßnahmen ändern kann, kann es zu einer Situation kommen, bei der die UCC Fahrfunktion (aufgrund der Kartendaten) bei einer vorausliegenden Signalisierungseinheit 200, 210 von einer Lichtsignalanlage 200 mit nur einer Signalgruppe 201 ausgeht, aber auf Basis der Umfelddaten zwei unterschiedliche Ampelfarben erkannt werden.

Wenn sich die Kartenattribute in Bezug auf eine Signalisierungseinheit 200, 210 von dem unterscheiden, was auf Basis der von dem Fahrzeug 100 erfassten Umfelddaten erkannt wird, kann das daran liegen, dass die Kartenattribute nicht korrekt sind, oder es daran liegen, dass die Umfelddaten falsch interpretiert werden (False Positive). Ein False Positive der Umfelddaten liegt häufig nur für eine relativ kurze Zeitdauer vor.

Um ein False Positive ausschließen zu können, kann die Steuereinheit 101 eingerichtet sein, in Reaktion auf eine erkannte Abweichung bzw. in Reaktion auf einen erkannten Widerspruch zwischen Umfelddaten und Kartendaten wiederholt eine Überprüfung der Situation durchzuführen, bevor eine Fahrzeugreaktion erfolgt (insbesondere bevor eine Nichtverfügbarkeitsausgabe bewirkt wird, oder bevor ein Betrieb der Fahrfunktion im manuellen Modus erfolgt). Durch das wiederholte Überprüfen kann ggf. erreicht werden, dass sich der Widerspruch auflöst, und somit eine verbesserte Reaktion der Fahrfunktion auf die Situation möglich ist. Diese verzögerte Reaktion kann bis zu einem Entscheidungszeitpunkt bzw. bis zu einer Entscheidungsposition herausgezögert werden, der bzw. die möglichst nah an der erkannten Signalisierungseinheit 200, 210 liegt, der bzw. die jedoch noch genügend Zeit belässt, um auch nach der verzögerten Reaktion noch automatisiert und/oder manuell sicher auf die Signalisierungseinheit 200, 210 reagieren zu können.

Wenn die UCC Fahrfunktion bei der Zufahrt auf eine Lichtsignalanlage 200, die laut Kartendaten nur eine Signalgruppe 201 besitzt, auf Basis der Umfelddaten mehrere unterschiedliche Ampelfarben detektiert, kann somit die Entscheidung darüber, ob manuell oder automatisch auf die Lichtsignalanlage 200 gebremst werden kann (d.h. ob mUCC oder aUCC durchgeführt wird) verzögert werden. Dies ist möglich, wenn die Signalgruppenabweichung so früh erkannt wird, dass auch nach einer verzögerten Reaktion noch sicher auf die Lichtsignalanlage 200 reagiert werden kann. Bei einer erkannten Signalgruppenabweichung erfolgt in diesem Fall vorerst keine Reaktion der Fahrfunktion auf die Lichtsignalanlage 200. Erst an dem Entscheidungszeitpunkt bzw. an der Entscheidungsposition, an dem bzw. an der spätestens ein mUCC-Angebot an den Fahrer ausgegeben werden müsste, um sowohl eine vorgegebene Mindestausgabedauer des Angebots als auch den notwendigen Bremsweg des Fahrzeugs 100 unter der Vorgabe einer maximalen Komfortverzögerung einzuhalten, kann dann eine Entscheidung darüber getroffen werden, ob die Fahrfunktion im automatischen Modus oder im manuellen Modus betrieben wird.

An dem Entscheidungszeitpunkt wird bevorzugt ein mUCC-Angebot ausgeben, wenn die Abweichung bzw. der Widerspruch von Umfelddaten und Kartendaten weiterhin vorliegt. Wenn an dem Entscheidungszeitpunkt andererseits keine Abweichung mehr erkennbar ist, kann von einem (vorübergehenden) False Positive der Umfelddaten ausgegangen werden und die Fahrfunktion kann automatisch (im aUCC Modus) auf die Lichtsignalanlage 200 regeln.

Die Steuereinheit 101 kann somit eingerichtet sein, einen Entscheidungszeitpunkt bzw. eine Entscheidungsposition vor einer erkannten Signalisierungseinheit 200, 210 zu ermitteln, an dem bzw. an der spätestens entschieden werden muss, ob die UCC-Fahrfunktion in dem automatischen Modus oder in dem manuellen Modus betrieben wird. Wenn an dem Entscheidungszeitpunkt bzw. an der Entscheidungsposition ein Widerspruch zwischen der Umfelddaten-basierten Erkennung der Signalisierungseinheit 200, 210 und der Kartendaten-basierten Erkennung der Signalisierungseinheit 200, 210 vorliegt, so kann die UCC-Fahrfunktion im manuellen Modus betrieben werden. Wenn kein Widerspruch vorliegt, so kann die UCC-Fahrfunktion im automatischen Modus betrieben werden. So können der Komfort und die Sicherheit der UCC-Fahrfunktion erhöht werden.

Die Steuereinheit 101 kann somit eingerichtet sein, in flexibler Weise zu entscheiden, ob für eine erkannte Signalisierungseinheit 200, 210 die UCC-Fahrfunktion in dem automatischen Modus oder in dem manuellen Modus betrieben werden kann. Die UCC Fahrfunktion kann somit im Mischbetrieb mit automatisch durchgeführten automatisierten Bremsungen und manuellen Angeboten zur Durchführung von automatisierten Bremsungen betrieben werden. Insbesondere kann in Abhängigkeit von der Komplexität eines Knotenpunktes, etwa einer Kreuzung, eine automatisierte Bremsung automatisch durchgeführt werden, oder es kann der Bedarf einer Fahrerbestätigung vor Durchführung der automatisierten Bremsung erkannt werden.

Mit anderen Worten, die Steuereinheit 101 kann eingerichtet sein, auf Basis der Kartendaten und auf Basis der Umfelddaten flexibel zu entscheiden, ob die UCC-Funktion an einer erkannten Signalisierungseinheit 200, 210 im automatischen Modus oder im manuellen Modus zu betreiben ist. Insbesondere kann entschieden werden, ob ein erkannter Knotenpunkt in automatisierter Weise sicher beherrscht werden kann oder nicht, und/oder ob die relevante Signalgruppe 201 für das Fahrzeug 100 bestimmt werden kann oder nicht.

Wenn die UCC-Funktion im automatischen Modus betrieben wird, und die für das Fahrzeug 100 relevante Signalgruppe 201 eine bremsrelevante Farbe aufweist, kann automatisch (ohne Bestätigung durch den Fahrer des Fahrzeugs 100) eine automatisierte Bremsung eingeleitet werden. Das automatische Einleiten der automatisierten Bremsung kann dem Fahrer über die Benutzerschnittstelle 107, z.B. über das Kombi-Instrument, mitgeteilt werden.

Ist die Kreuzung nicht sicher beherrschbar, kann die UCC-Funktion im manuellen Modus betrieben werden, und es kann dem Fahrer über die Benutzerschnittstelle 107, insbesondere über das Kombi-Instrument, (ggf. optisch) ein Angebot zur Durchführung einer automatisierten Bremsung ausgegeben werden. Insbesondere kann dem Fahrer angezeigt werden, welche Ampelfarbe von dem Fahrzeug 100 als relevant betrachtet wird. Ferner kann dem Fahrer angezeigt werden, mit welchem Bedienelement 412 das Angebot angenommen werden kann. Der Fahrer kann das Angebot dann ggf. annehmen (z.B. durch Betätigung des Bedienelements 412), und es kann dann ggf. eine automatisierte Bremsung in Bezug auf die erkannte Signalisierungseinheit 200, 210 eingeleitet und/oder durchgeführt werden. Bei Nicht-Annahme des Angebots kann das Fahrzeug 100 ggf. automatisiert über den Knotenpunkt hinweg längsgeführt werden (ohne, dass dabei die erkannte Signalisierungseinheit 200, 210 berücksichtigt wird).

Durch den flexiblen Betrieb der UCC-Fahrfunktion im automatischen Modus bzw. im manuellen Modus (je nach Komplexität der erkannten Signalisierungseinheiten 200, 210) können der Komfort, die Sicherheit und die Verfügbarkeit der UCC-Fahrfunktion erhöht werden.

Es kann dem Fahrer des Fahrzeugs 100 ermöglicht werden, die UCC-Fahrfunktion über die Benutzerschnittstelle 107 zu konfigurieren. Dabei kann der Fahrer z.B. festlegen, ob die UCC-Fahrfunktion (wenn möglich) im automatischen Modus (aUCC) betrieben werden soll, oder ob die UCC-Fahrfunktion grundsätzlich nur im manuellen Modus (mUCC) betrieben werden soll. Die Konfiguration bzw. die Änderung der Konfiguration kann z.B. an einem Konfigurationszeitpunkt bzw. an einer Konfigurationsposition (innerhalb des Fahrbahn- bzw. Straßennetzes) erfolgen.

Es kann vorkommen, dass eine Fahrfunktion, insbesondere die UCC-Fahrfunktion, an dem Konfigurationszeitpunkt bzw. an der Konfigurationsposition bereits in Bezug auf eine Signalisierungseinheit 200, 210 betrieben wird. Die Steuereinheit 101 kann eingerichtet sein, die an dem Konfigurationszeitpunkt bzw. an der Konfigurationsposition bewirkte Änderung der Konfiguration der Fahrfunktion erst dann bei dem Betrieb der Fahrfunktion zu berücksichtigen, wenn sich das Fahrzeug 100 in einem Zustand befindet, in dem die Konfigurationsänderungen keine unmittelbare Fahrzeugreaktion bewirkt.

Im Rahmen der UCC-Fahrfunktion kann ggf. eine Konfigurationsänderung über die Benutzerschnittstelle 107, die eine aktive Bremsung auf eine bestimmte Signalisierungseinheit 200, 210 abbrechen könnte, erst dann übernommen werden, wenn die aktive Bremsung beendet wurde oder wenn die aktive Bremsung durch andere Einflüsse (z.B. durch einen Abbruch durch den Fahrer) abgebrochen wurde. Die Konfigurationsänderung wirkt sich somit erst auf die nächste Fahrsituation mit einer Signalisierungseinheit 200, 210 aus. Wenn also während einer aktiven Ampelbremsung auf eine Ampel 200 die UCC Fahrfunktion (etwa durch den Beifahrer) deaktiviert wird, bremst das Fahrzeug 100 weiterhin bis in den Stillstand vor der Ampel 200. Erst im Anschluss an die Bremsung wird die Fahrfunktion tatsächlich deaktiviert.

In einem weiteren Beispiel im Rahmen der UCC-Fahrfunktion kann ggf. von einer automatischen Übernahme (aUCC) auf eine manuelle Übernahme (mUCC) einer erkannten Signalisierungseinheit 200, 210 umgeschaltet werden, während die Funktion bereits auf eine bestimmte Signalisierungseinheit 200, 210 regelt. Die Änderung wird dann bevorzugt erst nach Abschluss der bereits laufenden Regelung durchgeführt, so dass erst für eine nachfolgend erkannte Signalisierungseinheit 200, 210 die Ausgabe eines manuellen Angebots erfolgt.

Die Steuereinheit 101 kann somit eingerichtet sein, zu überprüfen, ob an dem Konfigurationszeitpunkt bzw. an der Konfigurationsposition einer Konfigurationsänderung der UCC-Fahrfunktion bereits eine Signalisierungseinheit 200, 210 für die UCC-Fahrfunktion erkannt wurde und/oder bereits eine automatisierte Längsführung in Bezug auf eine erkannte Signalisierungseinheit 200, 210 erfolgt. Wenn dies der Fall ist, so wird die Konfigurationsänderung ggf. erst für die direkt nachfolgende Signalisierungseinheit 200, 210 (und nicht für die bereits erkannte und/oder berücksichtige Signalisierungseinheit 200, 210) berücksichtigt. Insbesondere kann eine Deaktivierung der Fahrfunktion ggf. erst nach Abschluss der automatisierten Längsführung in Bezug auf die bereits erkannte Signalisierungseinheit 200, 210 erfolgen. So kann ein besonders sicherer Betrieb der UCC-Fahrfunktion bewirkt werden.

Wie bereits oben dargelegt, kann die Steuereinheit 101 eingerichtet sein, auf Basis der Umfelddaten (und ggf. auf Basis der Kartendaten) eine in Fahrtrichtung vor dem Fahrzeug 100 liegende Signalisierungseinheit 200, 210 zu detektieren. Ferner kann auf Basis der Umfelddaten die Farbe einer Signalgruppe 201 der Signalisierungseinheit 200, 210 ermittelt werden.

Es kann vorkommen (z.B. bei einem relativ späten Wechsel der Farbe einer Signalgruppe 201 von Grün auf Gelb), dass für eine detektierte Signalisierungseinheit 200, 210 keine automatisierte und/oder manuelle Bremsung mehr durchgeführt werden kann (mit einer bestimmten, festgelegten maximalen Verzögerung). In einem solchen Fall könnte eine Nichtverfügbarkeitsausgabe an den Fahrer des Fahrzeugs 100 ausgegeben werden, um dem Fahrer anzuzeigen, dass keine automatisierte Bremsung für die detektierte Signalisierungseinheit 200, 210 erfolgen wird. Die Ausgabe einer Nichtverfügbarkeitsausgabe, insbesondere einer Nichtverfügbarkeitsanzeige, wäre in einer solchen Situation jedoch typischerweise nicht sinnvoll, da auch durch den Fahrer des Fahrzeugs 100 keine manuelle Bremsung mehr durchgeführt werden kann oder sollte.

Die Steuereinheit 101 kann eingerichtet sein, eine Nichtverfügbarkeitsausgabe zu unterdrücken, wenn erst kurz vor Erreichen der Signalisierungseinheit 200, 210 erkannt wird, dass die Signalisierungseinheit 200, 210 nicht bei der automatisierten Längsführung des Fahrzeugs 100 berücksichtigt werden kann. Insbesondere kann die Steuereinheit 101 eingerichtet sein, an einem Zeitpunkt bzw. an einer Position, an der die Nichtverfügbarkeit der Unterstützung für eine Signalisierungseinheit 200, 210 erkannt wird, zu überprüfen,
- ob die Zeitdauer bis zum Erreichen der Signalisierungseinheit 200, 210 einem bestimmten Zeitdauer-Schwellenwert entspricht oder diesen unterschreitet; und/oder
- ob der Abstand 311 bis zum Erreichen der Signalisierungseinheit 200, 210 einem bestimmten Abstands-Schwellenwert entspricht oder diesen unterschreitet.

Der Zeitdauer-Schwellenwert und/oder der Abstands-Schwellenwert können dabei jeweils geschwindigkeitsabhängig oder geschwindigkeitsunabhängig sein. Der Zeitdauer-Schwellenwert und/oder der Abstands-Schwellenwert können derart festgelegt sein, dass für Zeitdauern länger als der Zeitdauer-Schwellenwert und/oder für Abstände größer als der Abstands-Schwellenwert weiterhin eine manuelle Bremsung des Fahrzeugs 100 durch den Fahrer zum Anhalten des Fahrzeugs 100 an der erkannten Signalisierungseinheit 200, 210 möglich und/oder sinnvoll ist. Dabei können z.B. eine maximal mögliche Verzögerung des Fahrzeugs 100 und/oder eine vordefinierte Reaktionszeit des Fahrers berücksichtigt werden.

Die Steuereinheit 101 kann eingerichtet sein, die Ausgabe einer Nichtverfügbarkeitsausgabe zu unterbinden, wenn bestimmt wird,
- dass die Zeitdauer bis zum Erreichen der Signalisierungseinheit 200, 210 dem bestimmten Zeitdauer-Schwellenwert entspricht oder diesen unterschreitet; und/oder
- dass der Abstand 311 bis zum Erreichen der Signalisierungseinheit 200, 210 dem bestimmten Abstands-Schwellenwert entspricht oder diesen unterschreitet.

Andererseits kann die Ausgabe der Nichtverfügbarkeitsausgabe bewirkt werden.

Die Steuereinheit 101 kann somit eingerichtet sein, zu bewirken, dass durch Falscherkennung und/oder durch eine spät nach Gelb schaltende Ampel in einem für den Fahrer nicht relevanten Bereich bis zum Erreichen der Ampel 200 (insbesondere, weil eine manuelle Bremsung nicht mehr sinnvoll ist) keine Nichtverfügbarkeitsanzeige (NVA) ausgegeben wird, da die Ausgabe einer derartigen NVA einen zusätzlichen Störfaktor für den Fahrer darstellen würde.

Insbesondere kann dabei bewirkt werden, dass in einem bestimmten Abstand x 311 in [m] und/oder in einem bestimmten zeitlichen Abstand in [s] vor Erreichen der Ampel 200 keine NVA ausgegeben wird. Der Mindestabstand x zur Halteposition der Ampel 200 kann dabei geschwindigkeitsunabhängig sein und kann ggf. eine untere Begrenzung darstellen. Unter diesem Abstandswert erfolgt dann ggf. grundsätzlich keine Anzeige der NVA. Das zeitliche Kriterium kann geschwindigkeitsabhängig sein. Dieses Kriterium kann dann insbesondere bei relativ hohen Geschwindigkeitsbereichen die Nichtausgabe der NVA bewirken. Durch die Unterdrückung der Ausgabe der NVA kann der Komfort der Fahrfunktion für den Fahrer des Fahrzeugs 100 erhöht werden.

Wie bereits oben dargelegt, kann die UCC Fahrfunktion in einem manuellen Modus betrieben werden, bei dem dem Fahrer des Fahrzeugs 100 ein Angebot zur Unterstützung bei der Längsführung an einer erkannten Signalisierungseinheit 200, 210 ausgegeben wird. Der Fahrer des Fahrzeugs 100 hat dann die Möglichkeit, das Angebot anzunehmen (z.B. durch Betätigung des Set-Bedienelements 212). Wenn das Angebot angenommen wird, kann bei Bedarf z.B. eine automatisierte Bremsung an der erkannten Signalisierungseinheit 200, 210 durchgeführt werden.

Es kann vorkommen, z.B. wenn das Fahrzeug 100 auf einer geraden Fahrbahn fährt, dass die nächste vorausliegende Signalisierungseinheit 200, 210 bereits in einem relativ großen (zeitlichen und/oder räumlichen) Abstand 311 vor Erreichen der Signalisierungseinheit 200, 210 (auf Basis der Umfelddaten) detektiert wird. In diesem Moment kann die erkannte Signalisierungseinheit 200, 210 ggf. noch für die Längsführung des Fahrzeugs 100 und/oder für den Fahrer des Fahrzeugs 100 irrelevant sein. Eine Ausgabe an den Fahrer des Fahrzeugs 100, z.B. in Bezug auf ein Angebot zur Unterstützung der automatisierten Längsführung an der erkannten Signalisierungseinheit 200, 210, könnte von dem Fahrer als störend und/oder irritierend empfunden werden.

Ferner kann es vorkommen, dass die Signalisierungseinheit 200, 210 zu einem späteren Zeitpunkt verdeckt wird, und somit nicht mehr erkannt wird. Dies könnte zu einer Rücknahme des Angebots an den Fahrer und somit zu einer Verwirrung des Fahrers führen.

Die Steuereinheit 101 kann eingerichtet sein, zu bestimmen, ob der (räumliche und/oder zeitliche) Abstand 311 zu einer erkannten Signalisierungseinheit 200, 210 gleich wie oder größer als ein Ausgabe-Schwellenwert ist. Ferner kann die Steuereinheit 101 eingerichtet sein, eine Ausgabe in Bezug auf die erkannte Signalisierungseinheit 200, 210 (z.B. ein Angebot zur Berücksichtigung der erkannten Signalisierungseinheit 200, 210 bei der automatisierten Längsführung) erst dann zu bewirken, wenn der (räumliche und/oder zeitliche) Abstand 311 zu der erkannten Signalisierungseinheit 200, 210 gleich wie oder kleiner als der Ausgabe-Schwellenwert ist.

Die Steuereinheit 101 kann somit eingerichtet sein, eine erforderliche Mindestausgabeentfernung zu einer erkannten Signalisierungseinheit 200, 210 zu berücksichtigen. Eine fehlende Bedingung in Bezug auf eine Mindestausgabeentfernung könnte zu Irritationen bei dem Fahrer führen, da auf dem Bildschirm 400 (z.B. im Kombiinstrument und/oder im Head Up Display) unplausible Wechsel in Bezug auf ein Angebot zur Unterstützung der automatisierten Längsführung an der erkannten Signalisierungseinheit 200, 210 angezeigt werden könnten, obwohl die Signalisierungseinheit 200, 210 (z.B. eine rote Ampel) für den Fahrer (noch) nicht relevant ist. Derartige Wechsel könnten z.B. durch Unsicherheiten bei der Kamera- Erkennung (aufgrund der relativ hohen Entfernung) bewirkt werden.

Die Steuereinheit 101 kann eingerichtet sein, nur dann ein Angebot in Bezug auf eine Signalisierungseinheit 200, 210 auszugeben, wenn eine bestimmte Distanz zu der Signalisierungseinheit 200, 210 unterschritten wird. Ggf. erfolgt dabei keine Anzeige, wenn das Fahrzeug 100 in der x. Reihe (mit x>1) vor der Signalisierungseinheit 200, 210 steht. Falsche und/oder unplausible Anzeigen können somit eliminiert werden. Die Steuereinheit 101 kann somit eingerichtet sein, die Ausgabe eines Angebots zu unterdrücken, solange der vordefinierte Ausgabeabstand 311 zu der Signalisierungseinheit 200, 210 nicht unterschritten ist. So kann der Komfort für den Nutzer erhöht werden.

Die Steuereinheit 101 kann eingerichtet sein, sequentiell nach dem Beenden der Unterstützung der Längsführung des Fahrzeugs 100 an einer ersten Signalisierungseinheit 200, 210 eine (direkt) nachfolgende zweite Signalisierungseinheit 200, 210 zu suchen, die bei der Längsführung des Fahrzeugs 100 berücksichtigt werden kann oder sollte. Insbesondere kann im Rahmen der mUCC Fahrfunktion nach Abschluss des Bremsvorgangs an einer ersten Signalisierungseinheit 200, 210 ein Vorschlag für die Berücksichtigung einer nachfolgenden zweiten Signalisierungseinheit 200, 210 ausgegeben werden. Alternativ kann im Rahmen der aUCC Fahrfunktion nach Abschluss des Bremsvorgangs an einer ersten Signalisierungseinheit 200, 210 eine automatische Berücksichtigung der nachfolgenden zweiten Signalisierungseinheit 200, 210 (und ggf. eine damit verbundene automatisierte Bremsung) erfolgen.

Die Erkennung einer nachfolgenden zweiten Signalisierungseinheit 200, 210 kann insbesondere beim Anfahren an einer Ampel (d.h. an einer ersten Signalisierungseinheit 200, 210) beeinträchtigt sein (z.B., weil die Umfelddaten teilweise noch Information in Bezug auf die erste Signalisierungseinheit 200, 210 anzeigen). Dies kann zu einem für den Fahrer des Fahrzeugs 100 unplausiblen Verhalten der Fahrfunktion führen.

Die Steuereinheit 101 kann eingerichtet sein, die Zeitdauer und/oder den räumlichen Abstand seit dem Anfahren des Fahrzeugs 100 an der ersten Signalisierungseinheit 200, 210 zu ermitteln. Die Ausgabe eines Angebots für die Berücksichtigung einer nachfolgenden zweiten Signalisierungseinheit 200, 210 und/oder die automatische Berücksichtigung einer nachfolgenden zweiten Signalisierungseinheit 200, 210 kann unterdrückt werden,
- solange die Zeitdauer kleiner als oder gleich wie ein Zeitdauer-Schwellenwert ist; und/oder
- solange der räumliche Abstand des Fahrzeugs 100 von der ersten Signalisierungseinheit 200, 210 kleiner als oder gleich wie ein Abstands-Schwellenwert ist; und/oder
- solange die Fahrgeschwindigkeit des Fahrzeugs 100 kleiner als oder gleich wie ein Geschwindigkeits-Schwellenwert ist.

Die Steuereinheit 101 kann somit eingerichtet sein, nach dem Anfahren des Fahrzeugs 100 alle manuellen und/oder automatischen Angebote für die Berücksichtigung von Signalisierungseinheiten 200, 210 für eine definierte Zeitdauer zu unterdrücken. Alternativ oder ergänzend kann es für das Zulassen eines manuellen und/oder automatischen Angebots erforderlich sein, dass eine Mindestgeschwindigkeit des Fahrzeugs 100 überschritten wird.

Insbesondere kann nach dem Anfahren des Fahrzeugs 100 ein Sperrtimer gestartet werden, der alle Angebote bis zu einer definierten Zeit ab Beginn des Zustands "Fahrens" unterdrückt. Ferner werden ggf. bis zu einer definierten Geschwindigkeit keine Angebote ausgegeben. So kann der Komfort der Fahrfunktion weiter erhöht werden.

Wie weiter oben dargelegt, kann das Fahrzeug 100 ein oder mehrere Fahrersensoren 108 umfassen, die eingerichtet sind, Fahrerdaten (d.h. Sensordaten) in Bezug auf den Fahrer des Fahrzeugs 100 zu erfassen. Die UCC Fahrfunktion kann in Abhängigkeit von den Fahrerdaten betrieben werden. Insbesondere kann eine Ausgabe von Information an den Fahrer des Fahrzeugs 100 in Abhängigkeit von den Fahrerdaten erfolgen oder ggf. unterbunden werden.

Die Steuereinheit 101 des Fahrzeugs 100 kann eingerichtet sein, auf Basis der Fahrerdaten zu bestimmen, ob der Fahrer ausreichend aufmerksam in Bezug auf die Fahraufgabe bzw. in Bezug auf die Überwachung der Fahrfunktion ist oder nicht. Des Weiteren kann die Steuereinheit 101 eingerichtet sein, eine auf dem Bildschirm 400 der Benutzerschnittstelle 107 angezeigte Nichtverfügbarkeitsanzeige (NVA) durch die Ausgabe eines optischen und/oder haptischen Signals zu ergänzen, wenn bestimmt wird, dass der Fahrer nicht ausreichend aufmerksam ist. So können der Komfort und die Sicherheit der UCC Fahrfunktion erhöht werden.

Die Nichtverfügbarkeitsanzeige kann z.B. ausgegeben werden, wenn erkannt wird, dass die Fahrfunktion (z.B. aufgrund der Späterkennung einer Ampel, aufgrund eines späten Umschaltens der Ampel auf Gelb, aufgrund einer verdeckten Kamera 103, etc.) nicht mehr rechtzeitig auf die Ampel reagieren kann (und somit eine automatisierte Bremsung an der Ampel nicht verfügbar ist). Die NVA kann z.B. im Kombiinstrument und/oder im Head Up Display angezeigt werden. Wenn der Fahrer an dem Zeitpunkt der Ausgabe der NVA unaufmerksam ist, könnte dies dazu führen, dass der Fahrer den optischen Hinweis übersieht (und weiterhin davon ausgeht, dass die Ampel 200 bei der automatisierten Längsführung berücksichtigt wird).

Zusätzlich zu dem optischen Hinweis kann daher z.B. ein akustisches Signal an den als unaufmerksam erkannten Fahrer ausgegeben werden, um den Fahrer aufzufordern, aufmerksam zu sein. Alternativ oder ergänzend kann eine Lenkradvibration und/oder eine Aktivierung von Leuchtstreifen am Lenkrad bewirkt werden. So kann gewährleistet werden, dass die Ampel, für die NVA angezeigt wird, nicht von dem Fahrer übersehen wird.

Anhand der Sensordaten einer Innenraumkamera 108 kann mittels eines Fahrermodell der Zustand des Fahrers ermittelt werden. Falls erkannt wird, dass der Fahrer unaufmerksam ist, kann zusätzlich zu der Nichtverfügbarkeitsanzeige einen Ton ausgegeben werden. Alternativ oder ergänzend kann eine zusätzliche haptische oder weitere optische Rückmeldung bewirkt werden.

Während des Betriebs einer Fahrfunktion, insbesondere einer Fahrerassistenzfunktion, kann es zu einer Änderung des Fahrverhaltens des Fahrzeugs 100 kommen. Beispielsweise kann von der Fahrfunktion automatisch ein bereits eingeleiteter Bremsvorgang abgebrochen werden, z.B. um das Fahrzeug 100 erneut zu beschleunigen. Dies kann z.B. im Rahmen der UCC Fahrfunktion erfolgen, wenn während einer automatisierten Bremsung an einer Lichtsignalanlage 200 mit einer roten Signalgruppe 201 die Signalgruppe 201 auf Grün wechselt. Die Änderung des durch die Fahrfunktion bewirkten Fahrverhaltens des Fahrzeugs 100 kann für den Fahrer des Fahrzeugs 100, insbesondere dann, wenn der Fahrer des Fahrzeugs 100 unaufmerksam ist, als beunruhigend und/oder als unkomfortabel empfunden werden.

Die Steuereinheit 101 kann eingerichtet sein, zu bestimmen, dass sich das von der Fahrfunktion des Fahrzeugs 100 bewirkte Fahrverhalten des Fahrzeugs 100 an einem bestimmten Änderungszeitpunkt wesentlich geändert hat oder wesentlich ändern wird. Des Weiteren kann die Steuereinheit 101 eingerichtet sein, auf Basis der Fahrerdaten der ein oder mehreren Fahrersensoren 108 zu bestimmen, dass der Fahrer des Fahrzeugs 100 an dem Änderungszeitpunkt unaufmerksam in Bezug auf die Fahraufgabe ist. In Reaktion darauf kann bewirkt werden, dass Information in Bezeug auf die Änderung des Fahrverhaltens an den Fahrer des Fahrzeugs 100 ausgegeben wird (z.B. über eine optische und/oder eine akustische Ausgabe). So kann der Komfort für den Fahrer des Fahrzeugs 100 erhöht werden.

Die UCC Fahrfunktion ist typischerweise als Fahrfunktion gemäß SAE-Level 2 ausgelegt. Bei einer solchen Fahrfunktion, insbesondere bei einem solchen Fahrerassistenzsystem, wird der Fahrer nur bei der (Längs-) Führung des Fahrzeugs 100 unterstützt und muss weiterhin jederzeit selbst agieren können. Die Fahrfunktion kann derart ausgebildet sein, dass in einer Situation, bei der die Fahrfunktion das Fahrverhalten des Fahrzeugs 100 in einer solchen Art und Weise ändert, dass der Fahrer reagieren muss oder zumindest das Fahrzeug 100 mit einer erhöhten Aufmerksamkeit überwachen sollte, Information in Bezug auf die Änderung des Fahrverhaltens ausgegeben wird.

Die Steuereinheit 101 kann somit eingerichtet sein, wenn die Fahrfunktion seine Ausprägung signifikant ändert, z.B. eine Bremsung abbricht und wieder in die Freifahrt beschleunigt, einen als unaufmerksam erkannten Fahrer optisch und/oder akustisch und/oder haptisch über die Veränderung zu informieren.

Wenn die UCC Fahrfunktion automatisch auf eine Ampel 200 bremst und diese während der Regelung von Rot auf Grün umschaltet, dann kann von der Steuereinheit 101 bewirkt werden, dass die UCC Fahrfunktion die Bremsung abbricht und in eine Freifahrt oder in eine Folgefahrt (bei Vorliegen eines vorausfahrenden Fahrzeugs) übergeht, insbesondere dann, wenn der Fahrer über die Innenraumkamera 108 als aufmerksam erkannt wird. Wird der Fahrer in dieser Situation nicht als aufmerksam erkannt, dann kann der Fahrer, z.B. über einen Gong, akustisch und/oder optisch, auf die veränderten Bedingungen hingewiesen werden. Die Bremsung kann dann aus Sicherheitsgründen trotz grüner Ampel solange fortgeführt werden, bis der Fahrer wieder als aufmerksam erkannt wird. So kann die Sicherheit der Fahrfunktion weiter erhöht werden.

Ein weiteres Beispiel im Rahmen der UCC Fahrfunktion ist die Nichtverfügbarkeitsanzeige (NVA). Falls eine rote Ampel 200 erst so spät erkannt wird, dass eine Bremsung unter Berücksichtigung der Funktionsgrenzen der Fahrfunktion nicht mehr (automatisiert) möglich ist, so wird von der Fahrfunktion typischerweise keine Bremsung begonnen und dem Fahrer stattdessen eine Nichtverfügbarkeitsanzeige angezeigt. Falls der Fahrer in dieser Situation nicht selbstständig bremst, könnte es zu einem Überfahren einer roten Ampel 200 kommen. Aus diesem Grund kann (insbesondere zeitgleich) mit der Ausgabe der Nichtverfügbarkeitsanzeige die Fahreraufmerksamkeit (insbesondere über die Innenraumkamera 108) überprüft werden. Wenn der Fahrer als unaufmerksam detektiert wird, kann ein akustischer Gong ausgegeben werden, der den Fahrer darauf aufmerksam macht, dass keine Bremsung durch die UCC Fahrfunktion erfolgt und unter Umständen eine Fahrerreaktion notwendig ist. So können die Sicherheit und der Komfort der Fahrfunktion erhöht werden.

Die Steuereinheit 101 des Fahrzeugs 100 kann eingerichtet sein, die im Rahmen einer Fahrfunktion, insbesondere im Rahmen der UCC Fahrfunktion, automatisch bewirkte Verzögerung und/oder Beschleunigung, insbesondere den zeitlichen Verlauf der Verzögerung und/oder der Beschleunigung, des Fahrzeugs 100 in Abhängigkeit von den Fahrerdaten, insbesondere in Abhängigkeit von dem erkannten Grad der Aufmerksamkeit des Fahrers, anzupassen. So können der Komfort und die Sicherheit der Fahrfunktion erhöht werden.

Durch die Überwachung der Fahreraufmerksamkeit wird es ermöglicht, den Verlauf einer Bremsung des Fahrzeugs 100 derart zu konzipieren, dass der Fahrer durch die resultierende Fahrzeugbewegung auf den Beginn eines automatisierten Bremsmanövers aufmerksam gemacht wird. So kann bewirkt werden, dass der Fahrer des Fahrzeug 100 mit erhöhter Wahrscheinlichkeit die automatisierte Bremsung überwacht. Beispielsweise kann eine Bremsung mit einem Ruck begonnen werden, wodurch ein haptisches Signal an den (als unaufmerksam erkannten) Fahrer bewirkt wird, als Hinweis darauf, die Aufmerksamkeit auf die Fahraufgabe zu richten.

Alternativ oder ergänzend kann der zeitliche Verlauf einer Verzögerung und/oder einer Beschleunigung des Fahrzeugs 100 von einem eingestellten Fahrmodus (z.B. Sportlich, Komfort und/oder Energiesparend) abhängen. Beispielsweise kann es ermöglicht werden (z.B. in einem Sport-Modus), die Verzögerung des Fahrzeugs 100 an einem späteren Zeitpunkt zu beginnen und/oder mit einem erhöhten Verzögerungswert durchzuführen, wenn der Fahrer des Fahrzeugs 100 als aufmerksam erkannt wird. So können der Komfort und die Sicherheit einer Fahrfunktion erhöht werden.

Die Steuereinheit 101 kann eingerichtet sein, (insbesondere auf Basis der Umfelddaten und/oder auf Basis der Kartendaten) den Typ der Signalisierungseinheit 200, 210 (aus einer vordefinierten Menge von unterschiedlichen Typen) zu ermitteln. Beispielhafte Typen sind eine Lichtsignalanlage 200 oder ein Verkehrszeichen 210. Alternativ oder ergänzend kann die Steuereinheit 101 eingerichtet sein, (insbesondere auf Basis der Umfelddaten und/oder auf Basis der Kartendaten) Zeitdauerinformation in Bezug auf die Zeitdauer zu prädizieren, die das Fahrzeug 100 voraussichtlich an der vorausliegenden Signalisierungseinheit 200, 210 halten muss, bevor das Fahrzeug 100 wieder anfahren kann. Es kann somit (auf Basis der Kartendaten und/oder der Umfelddaten) Halteinformation in Bezug auf den Halt des Fahrzeugs 100 an der vorausliegenden Signalisierungseinheit 200, 210 ermittelt werden.

Die automatisierte Verzögerung des Fahrzeugs 100 an der vorausliegenden Signalisierungseinheit 200, 210 kann dann in Abhängigkeit von der Zeitdauerinformation und/oder in Abhängigkeit von dem Typ der Signalisierungseinheit 200, 210 (d.h. in Abhängigkeit von der Halteinformation) bewirkt werden. Insbesondere können der zeitliche Verlauf der Verzögerung und/oder die Gesamtdauer des Verzögerungsvorgangs in Abhängigkeit von der Zeitdauerinformation und/oder in Abhängigkeit von dem Typ der Signalisierungseinheit 200, 210 (d.h. in Abhängigkeit von der Halteinformation) angepasst bzw. festgelegt werden. Beispielsweise kann an einer Lichtsignalanlage 200 mit einer roten Signalgruppe 201 ein relativ langsamer Verzögerungsvorgang gewählt werden (da das Fahrzeug 100 eh warten muss, bis die Signalgruppe 201 auf Grün wechselt). Andererseits kann an einem Stopp-Schild 210 ein relativ schneller Verzögerungsvorgang gewählt werden, da das Fahrzeug 100 nach dem Halt ggf. sofort weiterfahren kann (wenn es der Verkehr auf dem kreuzenden Verkehrsweg ermöglicht). Durch die Anpassung des Verzögerungsverlaufs kann der Komfort der Fahrfunktion erhöht werden.

Im Rahmen der UCC Fahrfunktion wird im Regelfall bis in den Stillstand des Fahrzeugs 100 geregelt. Dabei kann, wie oben dargelegt, je nach Typ der Signalisierungseinheit 200, 210 ein unterschiedlicher Verzögerungsverlauf verwendet werden. Insbesondere kann sich dabei die automatisierte Bremsung auf eine Ampel 200 von der automatisierten Bremsung auf ein Stopp-Schild 210 unterscheiden (weil der Fahrer nach Halt an einem Stopp-Schild 210 ggf. sofort weiterfahren kann).

Alternativ oder ergänzend kann die Fahrweise, insbesondere die Verzögerung bzw. die Verzögerungscharakteristik, des Fahrzeugs 100 per Fahrerlebnisschalter von dem Nutzer des Fahrzeugs 100 ausgewählt werden. Die Fahrfunktion kann auf Wunsch des Fahrers per Fahrerlebnisschalter (z.B. Eco, Komfort, Sport, etc.) unterschiedliche Verzögerungsverläufe auf Ampeln 200 und/oder Stopp-Schilder 210 annehmen. Die unterschiedlichen Verzögerungsverläufe können durch Anpassung von ein oder mehreren Parametern bei der Trajektorienplanung des Fahrzeugs 100 bewirkt werden.

Durch die Anpassung des Verzögerungsverlaufs der UCC Fahrfunktion an den Typ der Signalisierungseinheit 200, 210 können der Komfort und die Sicherheit der Fahrfunktion erhöht werden. Insbesondere kann eine Beeinträchtigung des nachfolgenden Verkehrs vermieden werden, der sich z.B. bei einer zu langsamen Verzögerung vor einem Stopp-Schild 210 ergeben könnte.

Im Rahmen der UCC Fahrfunktion kann dem Fahrer des Fahrzeugs 100 über die Benutzerschnittstelle 107, insbesondere auf dem Bildschirm 400, eine auf der von dem Fahrzeug 100 befahrenen Fahrbahn vorausliegende Signalisierungseinheit 200, 210 angezeigt werden, an der das Fahrzeug 100 anhalten muss. Beispielsweise kann das Symbol einer roten Ampel oder eines Stopp-Schilds auf dem Bildschirm 400 angezeigt werden. Alternativ oder ergänzend kann eine akustische Ausgabe in Bezug auf die erkannte Signalisierungseinheit 200, 210 bewirkt werden. Es kann dann automatisch (aUCC) oder nach Bestätigung durch den Fahrer (mUCC) ein automatisierter Bremsvorgang des Fahrzeugs 100 bis in den Stillstand an der Signalisierungseinheit 200, 210, insbesondere bis zu der Haltelinie der Signalisierungseinheit 200, 210, bewirkt werden.

Die Steuereinheit 101 kann eingerichtet sein (auf Basis der erfassten Umfelddaten), den (Signalisierungs-) Zustand, insbesondere die Farbe, der für das Fahrzeug 100 relevanten Signalgruppe 201 der Signalisierungseinheit 200, 210 zu überwachen, während das Fahrzeug 100 an der Signalisierungseinheit 200, 210 steht. Ferner kann die Steuereinheit 101 eingerichtet sein, die Anzeige in Bezug auf die Signalisierungseinheit 200, 210 zu ändern oder ganz zu löschen bzw. zurückzunehmen (und/oder eine akustische Ausgabe zu bewirken), wenn ein Phasenwechsel der Signalgruppe 201 von Rot auf Grün detektiert wird und/oder sobald das Fahrzeug 100 an der Signalisierungseinheit 200, 210 zum Stillstand gekommen ist. So kann dem Fahrer des Fahrzeugs 100 in eindeutiger Weise mitgeteilt werden, dass die Signalisierungseinheit 200, 210 nicht mehr für die Längsführung des Fahrzeugs 100 relevant ist. Die Zurücknahme der Anzeige kann im automatischen Modus und/oder im manuellen Modus der UCC Fahrfunktion bewirkt werden.

Des Weiteren kann es dem Fahrer des Fahrzeugs 100 ermöglicht werden, das Anfahren des Fahrzeugs 100 an der Signalisierungseinheit 200, 210 (insbesondere nach erkanntem Phasenwechsel von Rot auf Grün) über ein Bedienelement 413 (z.B. über die Resume-Taste) der Benutzerschnittstelle 107 zu bewirken. Insbesondere kann es dem Fahrer ermöglicht werden, durch Betätigen des Bedienelements 413 zu bewirken, dass das Fahrzeug 100 wieder auf die eingestellte Setz- bzw. Soll-Geschwindigkeit beschleunigt wird (unter Berücksichtigung eines eingestellten Soll-Abstands zu einem Vorder-Fahrzeug). Das Anfahren an der Signalisierungseinheit 200, 210 durch Betätigen der (Resume-) Bedienelements 413 kann im automatischen Modus und/oder im manuellen Modus der UCC Fahrfunktion ermöglicht werden.

Darüber hinaus kann das Anfahren nach dem Stillstand an der Signalisierungseinheit 200, 210 durch die Betätigung des Fahrpedals des Fahrzeugs 100 bewirkt werden. Dies kann jedoch ggf. zu einem Abbruch der UCC Fahrfunktion führen. Durch das Anfahren über ein Bedienelement 413 (insbesondere über eine Taste) der Benutzerschnittstelle 107 wird somit eine komfortable Fortführung der UCC Fahrfunktion an einer Sequenz von aufeinanderfolgenden Signalisierungseinheiten 200, 210 ermöglicht (im automatischen Modus und/oder im manuellen Modus der UCC Fahrfunktion).

Insbesondere kann die UCC Fahrfunktion derart ausgebildet sein, dass bei einer (ggf. manuell bestätigten) Ampel 200 (mUCC) nach Stillstand und nach einem erkannten Grünwechsel die Anzeige in Bezug auf die Ampel 200 zurückgenommen wird. Ferner kann es dem Fahrer ermöglicht werden, per Taste 413 anzufahren. So kann der Komfort der UCC Fahrfunktion erhöht werden. Außerdem kann so ein konsistentes Verhalten mit der ACC-Fahrfunktion (im Stillstand ohne Vorder-Fahrzeug) bewirkt werden. Die Steuereinheit 101 kann eingerichtet sein, zu bewirken, dass bei einer (ggf. manuell bestätigten) Ampeln 200 ab Beginn der Phasenwechselerkennung nach Grün ein Timer aktiviert wird, durch den veranlasst wird, dass ab Stillstand des Fahrzeugs 100 die rote Anzeige in Bezug auf die Ampel 200 weggenommen wird.

Die Steuereinheit 101 des Fahrzeugs 100 kann eingerichtet sein, das Anfahren des Fahrzeugs 100 an einer Signalisierungseinheit 200, 210 in Reaktion auf die Betätigung eines Bedienelements 411, 412, 413 der Benutzerschnittstelle 107 zu blockieren bzw. zu unterbinden, wenn erkannt wird, dass das Fahrzeug 100 in der ersten Reihe an der Signalisierungseinheit 200, 210 angeordnet ist. Mit anderen Worten, das Anfahren über die Betätigung eines Bedienelements 411, 412, 413 der Benutzerschnittstelle 107 kann ggf. nur dann ermöglicht werden, wenn vor dem Fahrzeug 100 zumindest ein anderes Vorder-Fahrzeug 100 an der Signalisierungseinheit 200, 210 steht. So kann die Sicherheit der UCC Fahrfunktion erhöht werden. Insbesondere kann so in zuverlässiger Weise verhindert werden, dass der Fahrer des Fahrzeugs 100 durch eine unbewusste Betätigung eines Bedienelements 411, 412, 413 der Benutzerschnittstelle 107 (insbesondere der Wippe 411, und/oder einer Taste 412, 413) das Anfahren an einer (ggf. roten) Ampel 200 bewirkt.

Es kann somit zuverlässig verhindert werden, dass der Fahrer bei Stillstand an einer roten Ampel 200 unbewusst ein Anfahren initiiert, indem der Fahrer z.B. die Setzgeschwindigkeit über die Wippe 411 verstellt oder ein Limit-Angebot mit der SET-Taste 412 bestätigt. Des Weiteren kann verhindert werden, dass eine Tastenbetätigung des Fahrers dazu führt, dass das Fahrzeug 100 wieder anfährt und auf Setz-Geschwindigkeit beschleunigt. Dies kann insbesondere dadurch erreicht werden, dass der Übergang von dem Zustand "Fahrzeug steht" zu dem Zustand "Anfahren" infolge einer Fahrerbestätigung eines Bedienelements 411, 412, 413 nicht möglich ist bzw. blockiert wird, solange das Fahrzeug 100 in der ersten Reihe vor einer halte-relevanten Ampel 200 steht. Eine Betätigung eines Bedienelements 411, 412, 413 ist somit wirkungslos.

Die Steuereinheit 101 des Fahrzeugs 100 kann eingerichtet sein, auf Basis der Umfelddaten und/oder auf Basis der Positionsdaten (in Zusammenhang mit den Kartendaten) zu bestimmen, ob sich das Fahrzeug 100 in der ersten Reihe an einer Signalisierungseinheit 200, 210 befindet oder nicht. Insbesondere kann der Abstand des Fahrzeugs 100 bis zu dem Haltepunkt bzw. bis zu der Haltelinie der Signalisierungseinheit 200, 210 ermittelt werden. Basierend auf dem ermittelten Abstand kann dann bestimmt werden, ob sich das Fahrzeug 100 in der ersten Reihe befindet oder nicht.

Es kann vorkommen, dass der Zustand der Signalisierungseinheit 200, 210, insbesondere die Farbe einer Signalgruppe 201 der Signalisierungseinheit 200, 210, nicht oder nicht zuverlässig auf Basis der Umfelddaten der ein oder mehrere Umfeldsensoren 103 des Fahrzeugs 100 erkannt werden kann. Dies könnte zu einer reduzierten Verfügbarkeit der UCC Fahrfunktion führen.

Die Steuereinheit 101 kann eingerichtet sein, auf Basis der Umfelddaten das (direkt) vor dem Fahrzeug 100 fahrende Vorder-Fahrzeug zu detektieren. Die UCC Fahrfunktion, insbesondere die automatisierte Längsführung des Fahrzeugs 100, kann dann an der Signalisierungseinheit 200, 210 auf Basis des Fahrverhaltens des Vorder-Fahrzeugs durchgeführt bzw. bereitgestellt werden. Durch die Berücksichtigung des Fahrverhaltens des Vorder-Fahrzeugs beim Betrieb der UCC Fahrfunktion können die Verfügbarkeit und somit der Komfort der Fahrfunktion erhöht werden.

Es kann während des Betriebs der UCC Fahrfunktion z.B. vorkommen, dass durch Verdeckung oder durch schlechte Lichtverhältnisse die Erkennung der Farbe einer Ampel 200 nur unzureichend möglich ist. Des Weiteren kann es bei einer komplexen Kreuzungsgeometrie (mit unterschiedlichen Signalgruppen 201) ggf. nicht möglich sein, die verschiedenen Signalgruppen 201 den einzelnen Fahrtrichtungen zuzuordnen. Zur Erhöhung des Automatisierungsgrades der Längsregelungsfunktion und folglich zur Erhöhung des Komforts für den Fahrer, kann, ggf. zusätzlich zu den Ampelfarben und/oder den Attributen einer Signalisierungseinheit 200, 210 aus den Kartendaten, auch das Verhalten des Vorder-Fahrzeugs ausgewertet und im Rahmen des Betriebs der Fahrfunktion berücksichtigt werden.

Fährt das Vorder-Fahrzeug z.B. über die vorausliegende Ampel 200, die potentiell Grün sein könnte, kann dem Vorder-Fahrzeug ggf. gefolgt werden. Insbesondere kann eine automatisierte Bremsung ggf. aufgehoben werden, solange auf Basis der Umfelddaten eine potentiell relevante, grüne Ampel erkannt wird. Mit anderen Worten, die Steuereinheit 101 kann eingerichtet sein, auf Basis der Umfelddaten zu erkennen, ob zumindest eine der Signalgruppen 201 der vorausliegenden Lichtsignalanlage bzw. Ampel 200 eine grüne Farbe aufweist. Wenn dies der Fall ist, und wenn (auf Basis der Umfelddaten) erkannt wird, dass das (direkt) vor dem Fahrzeug 100 fahrende Vorder-Fahrzeug über die Lichtsignalanlage 200 fährt, so kann bewirkt werden, dass auch das Fahrzeug 100 über die Lichtsignalanlage 200 fährt (auch wenn auf Basis der Umfelddaten und der Kartendaten nicht eindeutig bestimmt werden konnte, ob die Signalgruppe 201 mit der grünen Farbe für die Fahrtrichtung des Fahrzeugs 100 relevant ist). Durch eine derartige Berücksichtigung des Fahrverhaltens des Vorder-Fahrzeugs kann die Verfügbarkeit der Fahrfunktion in sicherer Weise erhöht werden.

Alternativ oder ergänzend kann die Steuereinheit 101 eingerichtet sein, bei Sichtverlust der Ampel 200 im Stillstand des Fahrzeug 100 und bei einem anfahrenden Vorder-Fahrzeug davon auszugehen, dass die Ampel 200 von Rot auf Grün umgeschaltet hat (bzw. bei Bedarfsampeln ausgeschaltet ist). Es kann dann ggf. ein automatisierter Anfahrvorgang des Fahrzeugs 100 bewirkt werden. Mit anderen Worten, die Steuereinheit 101 kann eingerichtet sein, zu erkennen, dass das (direkt) vor dem Fahrzeug 100 an einer Signalisierungseinheit 200, 210 stehende Vorder-Fahrzeug anfährt. Es kann daraufhin, auch ohne Erkennen des (Signalisierungs-) Zustands der Signalisierungseinheit 200, 210 ein automatisiertes Anfahren des Fahrzeugs 100 bewirkt werden (ggf. erst nach Betätigung eines Bedienelements 411, 412, 413 durch den Fahrer des Fahrzeugs 100). So kann die Verfügbarkeit der UCC Fahrfunktion in sicherer Weise erhöht werden.

Der Fahrer des Fahrzeugs 100 hat typischerweise die Möglichkeit, durch Betätigen des Fahrpedals und/oder des Bremspedals die automatisierte Längsführung der UCC Fahrfunktion zu übersteuern. Die erkannte Betätigung des Fahrpedals und/oder des Bremspedals kann ggf. auch dazu genutzt werden, die UCC Fahrfunktion zu beenden. Das automatische Beenden der UCC Fahrfunktion in Reaktion auf eine erkannte Betätigung des Fahrpedals und/oder des Bremspedals des Fahrzeugs 100 kann jedoch zu einem reduzierten Komfort und/oder zu einer reduzierten Sicherheit der UCC Fahrfunktion führen.

Beispielsweise kann es vorkommen, dass die Halteposition des Fahrzeugs 100 an einer Signalisierungseinheit 200, 210, insbesondere an der Haltelinie einer Signalisierungseinheit 200, 210), von dem Fahrer des Fahrzeugs 100 als zu weit vor der Signalisierungseinheit 200, 210 empfunden wird (insbesondere, wenn sich das Fahrzeug 100 in der ersten Reihe vor der Haltelinie befindet, und somit kein Vorder-Fahrzeug aufweist). Der Fahrer könnte in einem solchen Fall dazu geneigt sein, das Fahrzeug 100 durch Betätigung der Fahrpedals näher an die Haltelinie zu fahren, was jedoch zu einem Abbruch der UCC Fahrfunktion führen könnte und/oder wodurch ein automatisiertes Anfahren im Rahmen der Fahrfunktion ggf. unterbunden wird.

In einem weiteren Beispiel könnte der Fahrer des Fahrzeugs 100 dazu geneigt sein, aus dem Stillstand auf einer ersten Fahrspur vor einer Ampel 200 auf eine Nachbarspur zu wechseln (z.B. um den Abstand bis zu der Haltelinie zu reduzieren). Der Fahrer würde zu diesem Zweck das Fahrpedal betätigen, um das Fahrzeug 100 auf die Nachbarspur zu fahren. Dies könnte zu dem Abbruch der UCC Fahrfunktion und somit zu einer fehlenden Längsführungsunterstützung beim anschließenden Anfahren an der Ampel 200 führen.

Ferner könnte es vorkommen, dass eine von der UCC Fahrfunktion erkannte Signalisierungseinheit 200, 210 nicht bei der automatisierten Längsführung des Fahrzeugs 100 berücksichtigt wird (und ggf. ohne automatisierte Bremsung überfahren wird), wenn der Fahrer am Zeitpunkt der Erkennung der Signalisierungseinheit 200, 210 das Fahrpedal betätigt (und daher die Unterstützung der UCC Fahrfunktion beendet wird).

Andererseits sollte es für den Fahrer des Fahrzeugs 100 möglich sein, die UCC Fahrfunktion, z.B. bei einer Falschbremsung der Fahrfunktion, in zuverlässiger und komfortabler Weise (insbesondere durch Betätigung des Fahrpedals) zu übersteuern.

Die Steuereinheit 101 kann eingerichtet sein, Auslenkungsinformation in Bezug auf die Auslenkung, insbesondere in Bezug auf das Ausmaß der Auslenkung, des Fahrpedals zu ermitteln. Die Auslenkungsinformation kann z.B. auf Basis eines Fahrpedalsensors des Fahrzeugs 100 ermittelt werden. Alternativ oder ergänzend kann die Steuereinheit 101 eingerichtet sein, Zeitinformation in Bezug auf die Dauer der Betätigung des Fahrpedals zu ermitteln. Es kann dann auf Basis der Auslenkungsinformation und/oder auf Basis der Zeitinformation bestimmt werden, ob die Unterstützung der automatisierten Längsführung des Fahrzeugs 100 an einer Signalisierungseinheit 200, 210 bereitgestellt wird oder nicht und/oder ob die Fahrfunktion beendet wird oder nicht.

Insbesondere kann die Steuereinheit 101 eingerichtet sein, auf Basis der Auslenkungsinformation zu ermitteln, ob die Auslenkung des Fahrpedals größer oder kleiner als ein Auslenkungs-Schwellenwert (z.B. von 25% der maximal möglichen Auslenkung des Fahrpedals) ist. Des Weiteren kann die Steuereinheit 101 eingerichtet sein, auf Basis der Zeitinformation zu ermitteln, ob die Dauer der Auslenkung des Fahrpedals größer oder kleiner als ein Zeit-Schwellenwert (z.B. von 4 Sekunden) ist.

Die Steuereinheit 101 kann eingerichtet sein, eine Betätigung des Fahrpedals zuzulassen, ohne die UCC Fahrfunktion zu beenden, wenn ermittelt wird, dass
- die Auslenkung des Fahrpedals kleiner als oder gleich wie der Auslenkungs-Schwellenwert ist; und
- die Dauer der Betätigung des Fahrpedals kleiner als oder gleich wie der Zeit-Schwellenwert ist.

Andererseits kann ein Abwurf bzw. ein Beenden der UCC Fahrfunktion bewirkt werden, wenn ermittelt wird, dass
- die Auslenkung des Fahrpedals größer als der Auslenkungs-Schwellenwert ist; oder
- die Dauer der Betätigung des Fahrpedals größer als der Zeit-Schwellenwert ist.

Der Abwurf bzw. Abbruch kann sich dabei ggf. nur auf die nächste Signalisierungseinheit 200, 210 beziehen, die auf die Betätigung des Fahrpedals folgt. Es kann somit ggf. nur ein vorübergehender Abwurf bzw. ein vorübergehendes Beenden der UCC Fahrfunktion bewirkt werden (nur für die Signalisierungseinheit 200, 210, die direkt auf die Betätigung des Fahrpedals folgt).

So können der Komfort und/oder die Sicherheit der UCC Fahrfunktion erhöht werden. Insbesondere kann es so dem Fahrer des Fahrzeugs 100 ermöglicht werden, das Fahrzeug 100 durch (leichtes) Betätigen des Fahrpedals näher an die Haltelinie und/oder auf eine Nachbarspur vor einer Signalisierungseinheit 200, 210 zu fahren (ohne, dass dabei die automatisierte Unterstützung der UCC Fahrfunktion, etwa für das anschließende Anfahren des Fahrzeugs 100, beendet wird). Ferner kann so bewirkt werden, dass eine erkannte Signalisierungseinheit 200, 210 auch dann bei der automatisierten Längsführung des Fahrzeugs 100 berücksichtigt wird, wenn der Fahrer kurzfristig und relativ leicht das Fahrpedals betätigt (während die Signalisierungseinheit 200, 210 erkannt wird). Des Weiteren kann so ein komfortables und sicheres Übersteuern eines Eingriffs der UCC Fahrfunktion ermöglicht werden.

Die Fahrfunktion kann somit derart ausgebildet sein, dass (erst) wenn ein bestimmter Fahrpedalwinkel überschritten wird, der sofortige Abwurf der Fahrfunktion bewirkt wird. Ferner kann ein Abwurf der Fahrfunktion bewirkt werden, wenn ein bestimmter Zeit-Schwellenwert der Betätigung des Fahrpedals überschritten wird (auch dann, wenn der Auslenkungs-Schwellenwert nicht überschritten wird). Andererseits kann die Zeit bis Erreichen des Zeit-Schwellenwertes von dem Fahrer dazu genutzt werden, sich an die Haltelinie einer Kreuzung heranzutasten.

Ferner kann die Fahrfunktion derart ausgebildet sein, dass die Fahrfunktion nicht abgeworfen wird, wenn eine Ampel 200 erkannt wird, während das Fahrpedal getreten wird. So kann in zuverlässiger Weise eine reaktionslose Überfahrt der Ampel 200 verhindert werden.

Bei Stillstand an einer roten Ampel 200 kann es vorkommen, dass der Fahrer bei Umschaltung der Ampel 200 nach Grün durch Betätigen des Fahrpedals losfährt, weil die Umschaltung auf Grün von der UCC Fahrfunktion noch nicht erkannt wurde (z.B. aufgrund von Latenzen und/oder aufgrund einer Nichterkennung des Farbwechsels). Die Betätigung des Fahrpedals könnte zu einem Abbruch der UCC Fahrfunktion (und zu der Ausgabe eines damit verbundenen Take-Over-Requests (TOR) bzw. einer damit verbundenen Übernahmeaufforderung führen). Dies kann von dem Fahrer des Fahrzeugs 100 als störend empfunden werden.

Die Steuereinheit 101 kann eingerichtet sein, Geschwindigkeitsdaten in Bezug auf die Fahrgeschwindigkeit des Fahrzeugs 100 bei einem Anfahrvorgang zu ermitteln, den der Fahrer des Fahrzeugs 100 durch Betätigung des Fahrpedals bewirkt. Des Weiteren kann die Steuereinheit 101 eingerichtet sein, die automatisierte Längsführung von dem Fahrer zu übernehmen, solange die durch die Betätigung des Fahrpedals bewirkte Fahrgeschwindigkeit einen vordefinierten Geschwindigkeits-Schwellenwert noch nicht überschritten hat. Die Ausgabe eines TOR und/oder der Abbruch der UCC Fahrfunktion kann somit bis Erreichen des Geschwindigkeits-Schwellenwert unterdrückt und/oder unterbunden werden (und es kann eine Übernahme der Längsführung durch die Fahrfunktion bewirkt werden). Andererseits kann die Ausgabe des TOR und/oder der Abbruch der UCC Fahrfunktion bewirkt werden, wenn (insbesondere sobald) der Geschwindigkeits-Schwellenwert (z.B. 10 km/h) erreicht oder überschritten wird. So kann der Komfort für den Fahrer des Fahrzeugs 100 weiter erhöht werden.

Die Steuereinheit 101 kann eingerichtet sein, einen Fahrmodus aus einer Mehrzahl von unterschiedlichen Fahrmodi zu ermitteln, in dem das Fahrzeug 100 betrieben wird. Beispielhafte Fahrmodi sind
- ein Sport-Fahrmodus, bei dem das Fahrzeug 100 eine relativ hohe Fahrdynamik, mit relativ starken Beschleunigungs- und/oder Verzögerungswerten, aufweist;
- ein Komfort-Fahrmodus, bei dem das Fahrzeug 100 eine besonders komfortable Fahrweise aufweist, mit relativ niedrigen Beschleunigungs- und/oder Verzögerungswerten; und/oder
- ein Eco-Fahrmodus, bei dem das Fahrzeug 100 eine besonders energiesparende Fahrweise aufweist.

Der Fahrmodus kann z.B. über die Benutzerschnittstelle 107, z.B. über ein oder mehrere Bedienelemente der Benutzerschnittstelle 107, von dem Nutzer des Fahrzeugs 100 einstellbar sein.

Die Steuereinheit 101 kann ferner eingerichtet sein, die UCC Fahrfunktion in Abhängigkeit von dem eingestellten Fahrmodus zu betreiben. Insbesondere kann das Fahrverhalten, etwa das Verzögerungsverhalten, des Fahrzeugs 100 in Bezug auf eine vorausliegende Signalisierungseinheit 200, 210 in Abhängigkeit von dem Fahrmodus angepasst werden. Beispielsweise kann der Zeitpunkt, ab dem das Fahrzeug 100 auf eine erkannte Signalisierungseinheit 200, 210 (an der das Fahrzeugs 100 halten soll), in Abhängigkeit von dem Fahrmodus angepasst werden. Bei dem Eco-Fahrmodus kann z.B. eine besonders frühzeitige Reaktion des Fahrzeugs 100 bewirkt werden, während bei dem Komfort-Fahrmodus erst später eine Reaktion bewirkt wird, und während bei dem Sport-Fahrmodus die Reaktion noch später bewirkt wird.

Alternativ oder ergänzend kann der Typ bzw. die Art der Reaktion des Fahrzeugs 100 auf eine erkannte, zu berücksichtigende, Signalisierungseinheit 200, 210 in Abhängigkeit von dem eingestellten Fahrmodus angepasst werden. Beispielhafte Reaktions-Typen bzw. Arten sind:
- ein Segel-Betrieb des Fahrzeugs 100, bei dem die Räder des Fahrzeugs 100 von dem Antriebsmotor des Fahrzeugs 100 entkoppelt werden. Ggf. kann der Antriebsmotor dann deaktiviert werden;
- ein Schlepp-Betrieb des Fahrzeugs 100, bei dem die Räder des Fahrzeugs 100 den Antriebsmotor mitschleppen, was zu einer Schlepp-Verzögerung des Fahrzeugs 100 führt; und/oder
- ein aktiver (Reib- und/oder Rekuperations-) Brems-Betrieb, bei dem aktiv (z.B. durch eine Reibbremse und/oder durch eine elektrische Maschine) ein Bremsmoment auf ein oder mehrere Räder des Fahrzeugs 100 bewirkt wird.

Bei dem Eco-Fahrmodus kann z.B. bei der Annäherung an eine Signalisierungseinheit 200, 210 zunächst in den Segel-Betrieb, anschließend in den Schlepp-Betrieb und schließlich in den Brems-Betrieb übergegangen werden. Bei dem Komfort-Fahrmodus kann ggf. auf den Segel-Betrieb verzichtet werden, und direkt der Schlepp-Betrieb sowie nachfolgend der Brems-Betrieb eingeleitet werden. Bei dem Sport-Fahrmodus kann ggf. auf den Segel-Betrieb und den Schlepp-Betrieb verzichtet werden, und direkt der Brems-Betrieb eingeleitet werden.

Das Verzögerungsverhalten des Fahrzeugs 100 bei der Annäherung an eine Signalisierungseinheit 200, 210 kann folglich an den eingestellten Fahrmodus angepasst werden. So kann der Komfort des Fahrzeugs 100 weiter erhöht werden.

Die Steuereinheit 101 kann somit eingerichtet sein, den (Ausgabe-) Zeitpunkt zur Reaktion auf eine Ampel in Abhängigkeit von dem eingestellten Fahrmodus zu variieren. Im ECO-Fahrmodus kann ein relativ frühzeitiger Beginn der Ampelregelung erfolgen, z.B. mit einer Betriebs-Abfolge: Segel-Betrieb, Schlepp-Betrieb und Brems-Betrieb. Im Komfort-Fahrmodus kann ein mittlerer Anfangszeitpunkt für die Ampelregelung gewählt werden, z.B. mit einer Betriebs-Abfolge Schlepp-Betrieb und Brems-Betrieb. Im Sport-Fahrmodus kann ein relativ später Beginn der Ampelregelung erfolgen, z.B. direkt mit dem Brems-Betrieb.

Die Ampelregelung (insbesondere der Verzögerungsverlauf des Fahrzeugs 100) kann durch die Anpassung an den Fahrmodus besonders komfortabel gestaltet werden. Weiterhin ist eine vorausschauende Fahrweise "durch frühzeitiges Gaswegnehmen" darstellbar, welche u.a. die Dynamik auf ein stehendes Zielobjekt vorab reduziert. Es können somit ein Komfort- und Sicherheitsgewinn für den Fahrer des Fahrzeugs 100 bewirkt werden. In Abhängigkeit von dem Fahrmodus (z.B. Eco, Komfort und Sport) kann eine jeweils an den Fahrmodus angepasste (Fahr- und/oder Verzögerungs-) Charakteristik eingestellt werden. So kann eine besonders harmonische Interaktion zwischen der ACC Funktion und der UCC Fahrfunktion ermöglicht werden.

Im Folgenden werden unterschiedliche Aspekte des in diesem Dokument beschriebenen Fahrzeugführungssystems 101 anhand von Verfahren beschrieben.

Fig. 5a zeigt ein Ablaufdiagramm eines beispielhaften (ggf. Computerimplementierten) Verfahrens 500 zur Bereitstellung einer Fahrfunktion (insbesondere der UCC Fahrfunktion) zur automatisierten Längsführung eines Fahrzeugs 100.

Das Verfahren 500 umfasst, während des Betriebs der Fahrfunktion, das Ermitteln 501 von Daten in Bezug auf eine in Fahrtrichtung des Fahrzeugs 100 vorausliegende erste Signalisierungseinheit 200, 210. Insbesondere können als Daten Umfelddaten von ein oder mehreren Umfeldsensoren 103 des Fahrzeugs 100 und/oder Kartendaten in Bezug auf das von dem Fahrzeug 100 befahrene Fahrbahnnetz ermittelt werden.

Des Weiteren umfasst das Verfahren 500 das Betreiben 502 der Fahrfunktion an der ersten Signalisierungseinheit 200, 210 in Abhängigkeit von den Daten in Bezug auf die erste Signalisierungseinheit 200, 210 in einem automatischen Modus oder in einem manuellen Modus. Dabei kann die erste Signalisierungseinheit 200, 210 in dem automatischen Modus ggf. automatisch und in dem manuellen Modus ggf. erst nach Bestätigung durch einen Nutzer des Fahrzeugs 100 bei der automatisierten Längsführung des Fahrzeugs 100 berücksichtigt werden.

Beispielsweise kann die Fahrfunktion in dem automatischen Modus betrieben werden, wenn auf Basis der Daten die für die Fahrtrichtung des Fahrzeugs 100 relevante Farbe einer Signalgruppe 201 der Signalisierungseinheit 200, 210 eindeutig ermittelt werden kann. Wenn die Farbe der relevanten Signalgruppe 201 nicht eindeutig ermittelt werden kann, kann ggf. der manuelle Modus verwendet werden. Es kann somit in flexibler Weise in Abhängigkeit von den verfügbaren Daten für eine Signalisierungseinheit 200, 210 der automatische Modus oder der manuelle Modus der Fahrfunktion verwendet werden. Durch den flexiblen Wechsel zwischen dem automatischen Modus und dem manuellen Modus können die Verfügbarkeit und somit der Komfort der Fahrfunktion erhöht werden.

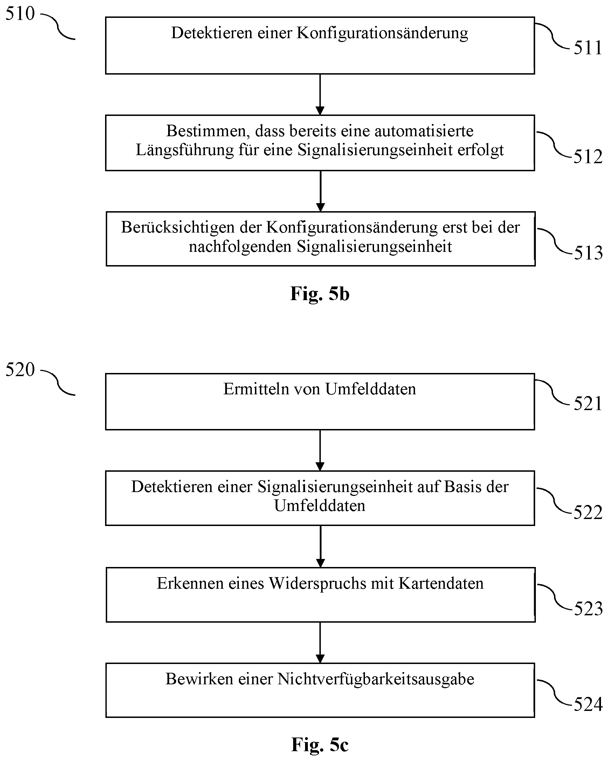

Fig. 5b zeigt ein Ablaufdiagramm eines beispielhaften (ggf. Computerimplementierten) Verfahrens 510 zur Bereitstellung einer Fahrfunktion (insbesondere der UCC Fahrfunktion) zur automatisierten Längsführung eines Fahrzeugs 100 an einer Signalisierungseinheit 200, 210.

Das Verfahren 510 umfasst, während des Betriebs der Fahrfunktion, das Detektieren 511, dass an einem Konfigurationszeitpunkt oder an einer Konfigurationsposition des Fahrzeugs 100 von einem Nutzer des Fahrzeugs 100 eine Konfigurationsänderung einer Eigenschaft der Fahrfunktion bewirkt wird (z.B. ein Wechsel von dem automatischen Modus zu dem manuellen Modus, oder eine Deaktivierung der Fahrfunktion).

Das Verfahren 510 umfasst ferner das Bestimmen 512, dass an dem Konfigurationszeitpunkt oder an der Konfigurationsposition bereits eine in Fahrtrichtung des Fahrzeugs 100 vorausliegende erste Signalisierungseinheit 200, 210 bei der automatisierten Längsführung des Fahrzeugs 100 berücksichtigt wird. Des Weiteren umfasst das Verfahren 510 das Berücksichtigen 513 der Konfigurationsänderung erst bei der auf die erste Signalisierungseinheit 200, 210 nachfolgenden Signalisierungseinheit 200, 210 bei der automatisierten Längsführung des Fahrzeugs 100 und/oder erst nach Beenden bzw. Abschließen der automatisierten Längsführung des Fahrzeugs 100 an der ersten Signalisierungseinheit 200, 210 (z.B. erst nach Abbremsen des Fahrzeugs 100 an der ersten Signalisierungseinheit 200, 210 bis in den Stillstand). Die automatisierte Längsführung für die erste Signalisierungseinheit 200, 210 kann dabei weiter ohne Berücksichtigung der Konfigurationsänderung bewirkt werden. So kann ein besonders sicherer Betrieb der Fahrfunktion ermöglicht werden.

Fig. 5c zeigt ein Ablaufdiagramm eines beispielhaften (ggf. Computerimplementierten) Verfahrens 520 zur Bereitstellung einer Fahrfunktion (insbesondere der UCC Fahrfunktion) zur automatisierten Längsführung eines Fahrzeugs 100 an einer Signalisierungseinheit 200, 210.

Das Verfahren 520 umfasst, während des Betriebs der Fahrfunktion, das Ermitteln 521 von Umfelddaten in Bezug auf das in Fahrtrichtung vor dem Fahrzeug 100 liegende Umfeld des Fahrzeugs 100. Die Umfelddaten können dabei von ein oder mehreren Umfeldsensoren 103 des Fahrzeugs 100 erfasst worden sein. Des Weiteren umfasst das Verfahren 520 das Detektieren 522, auf Basis der Umfelddaten, einer ersten Signalisierungseinheit 200, 210, die auf der von dem Fahrzeug 100 befahrenen Fahrbahn in Fahrtrichtung vor dem Fahrzeug 100 liegt.

Das Verfahren 520 umfasst ferner das Bestimmen 523, dass ein Widerspruch zwischen der auf Basis der Umfelddaten detektierten ersten Signalisierungseinheit 200, 210 und den Kartendaten in Bezug auf das von dem Fahrzeug 100 befahrene Fahrbahnnetz vorliegt. Beispielsweise kann erkannt werden, dass die auf Basis der Umfelddaten erkannte erste Signalisierungseinheit 200, 210 eine andere (insbesondere eine höhere) Anzahl von unterschiedlichen Signalgruppen 201 aufweist als in den Kartendaten verzeichnet.

Außerdem umfasst das Verfahren 520, in Reaktion auf den erkannten Widerspruch, das Bewirken 524 einer Nichtverfügbarkeitsausgabe, insbesondere einer NVA, an den Nutzer des Fahrzeugs 100, um den Nutzer darüber zu informieren, dass die auf Basis der Umfelddaten detektierte erste Signalisierungseinheit 200, 210 nicht bei der Fahrfunktion zur automatisierten Längsführung des Fahrzeugs 100 berücksichtigt wird. So kann die Sicherheit der Fahrfunktion weiter erhöht werden.

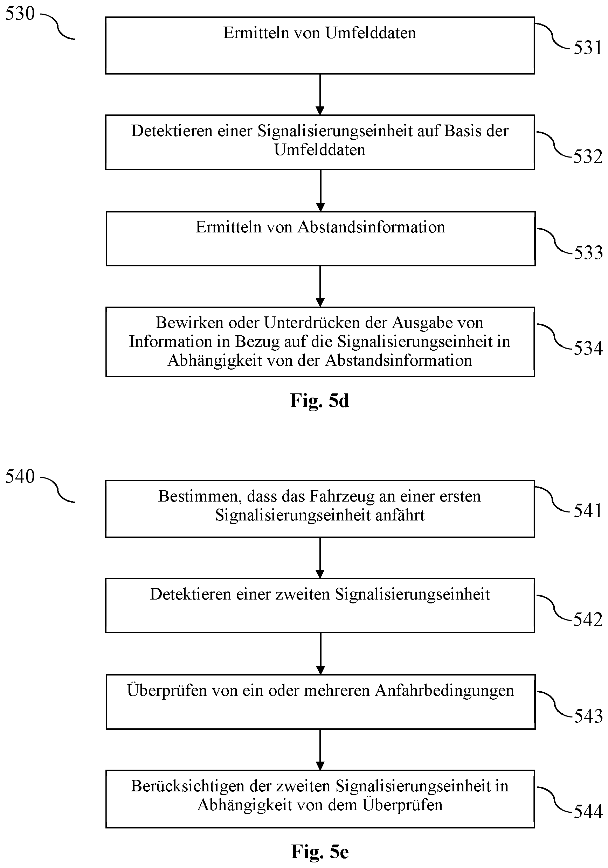

Fig. 5d zeigt ein Ablaufdiagramm eines beispielhaften (ggf. Computerimplementierten) Verfahrens 530 zur Bereitstellung einer Fahrfunktion (insbesondere der UCC Fahrfunktion) zur automatisierten Längsführung eines Fahrzeugs 100 an einer Signalisierungseinheit 200, 210.

Das Verfahren 530 umfasst, während des Betriebs der Fahrfunktion, das Ermitteln 531 von Umfelddaten in Bezug auf das in Fahrtrichtung vor dem Fahrzeug 100 liegende Umfeld des Fahrzeugs 100. Des Weiteren umfasst das Verfahren 530 das Detektieren 532, auf Basis der Umfelddaten, einer ersten Signalisierungseinheit 200, 210, die auf der von dem Fahrzeug 100 befahrenen Fahrbahn in Fahrtrichtung vor dem Fahrzeug 100 angeordnet ist.

Das Verfahren 530 umfasst ferner das Ermitteln 533 von Abstandsinformation in Bezug auf den zeitlichen und/oder den räumlichen Abstand 311 des Fahrzeugs 100 bis zu der ersten Signalisierungseinheit 200, 210. Außerdem umfasst das Verfahren 530 das Bewirken oder Unterdrücken 534 einer Ausgabe von Information in Bezug auf die erste Signalisierungseinheit 200, 210 in Abhängigkeit von der Abstandsinformation. Insbesondere kann die Ausgabe (insbesondere ein Angebot zur automatisierten Längsführung an der ersten Signalisierungseinheit 200, 210) unterdrückt werden, wenn sich das Fahrzeug 100 noch zu weit von der ersten Signalisierungseinheit 200, 210 entfernt befindet.

Alternativ oder ergänzend kann eine Ausgabe (insbesondere eine Nichtverfügbarkeitsausgabe) unterdrückt werden, wenn sich das Fahrzeug 100 bereits zu nah an der ersten Signalisierungseinheit 200, 210 befindet. So können die Relevanz der Ausgabe und somit der Komfort der Fahrfunktion erhöht werden.

Fig. 5e zeigt ein Ablaufdiagramm eines beispielhaften (ggf. Computerimplementierten) Verfahrens 540 zur Bereitstellung einer Fahrfunktion (insbesondere der UCC Fahrfunktion) zur automatisierten Längsführung eines Fahrzeugs 100 an einer Signalisierungseinheit 200, 210.

Das Verfahren 540 umfasst, während des Betriebs der Fahrfunktion, das Bestimmen 541, dass das Fahrzeug 100 an einer ersten Signalisierungseinheit 200, 210 einen Anfahrvorgang durchführt. Des Weiteren umfasst das Verfahren 540 das Detektieren 542, auf Basis der Umfelddaten von ein oder mehreren Umfeldsensoren 103 des Fahrzeugs 100, einer der ersten Signalisierungseinheit 200, 210 nachfolgenden zweiten Signalisierungseinheit 200, 210, die auf der von dem Fahrzeug 100 befahrenen Fahrbahn in Fahrtrichtung vor dem Fahrzeug 100 angeordnet ist.

Außerdem umfasst das Verfahren 540 das Überprüfen 543, ob ein oder mehrere Anfahrvorgangsbedingungen in Bezug auf den Anfahrvorgang erfüllt sind oder nicht (z.B. ein oder mehrere Anfahrvorgangsbedingungen in Bezug auf die Fahrgeschwindigkeit des Fahrzeugs 100 und/oder in Bezug auf den zeitlichen bzw. räumlichen Abstand des Fahrzeugs 100 von der ersten Signalisierungseinheit 200, 210).

Das Verfahren 540 umfasst ferner das Berücksichtigen 544 der zweiten Signalisierungseinheit 200, 210 bei der automatisierten Längsführung des Fahrzeugs 100 in Abhängigkeit davon, ob die ein oder mehreren Anfahrvorgangsbedingungen erfüllt sind oder nicht. Insbesondere kann dabei eine zweite Signalisierungseinheit 200, 210, die in unmittelbarer zeitlicher oder räumlicher Nähe zu der ersten Signalisierungseinheit 200, 210 erkannt wird, unberücksichtigt bleiben. So können die Zuverlässigkeit und der Komfort der Fahrfunktion erhöht werden (z.B., da die Ausgabe von fehlerhaft erkannten Signalisierungseinheiten 200, 210 vermieden wird).

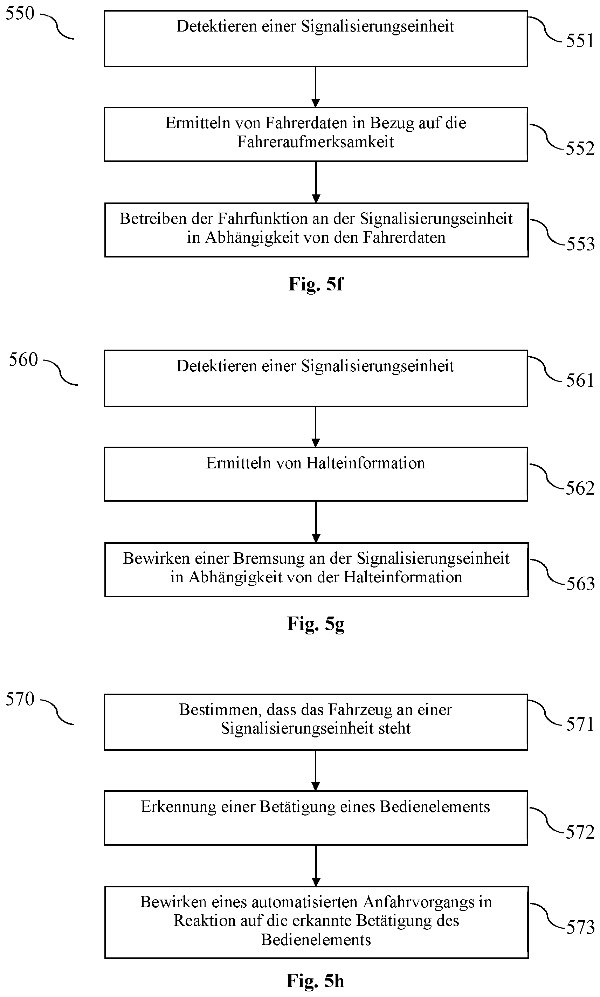

Fig. 5f zeigt ein Ablaufdiagramm eines beispielhaften (ggf. Computerimplementierten) Verfahrens 550 zur Bereitstellung einer Fahrfunktion (insbesondere der UCC Fahrfunktion) zur automatisierten Längsführung eines Fahrzeugs 100 an einer Signalisierungseinheit 200, 210.

Das Verfahren 550 umfasst, während des Betriebs der Fahrfunktion, das Detektieren 551, auf Basis der Umfelddaten von ein oder mehreren Umfeldsensoren 103 des Fahrzeugs 100, einer ersten Signalisierungseinheit 200, 210, die auf der von dem Fahrzeug 100 befahrenen Fahrbahn in Fahrtrichtung vor dem Fahrzeug 100 angeordnet ist. Des Weiteren umfasst das Verfahren 550 das Ermitteln 552 von Fahrerdaten in Bezug auf die Aufmerksamkeit des Fahrers des Fahrzeugs 100 bei der Überwachung der Fahrfunktion. Außerdem umfasst das Verfahren 550 das Betreiben 553 der Fahrfunktion in Bezug auf die automatisierte Längsführung des Fahrzeugs 100 an der ersten Signalisierungseinheit 200, 210 in Abhängigkeit von den Fahrerdaten. Insbesondere kann die Fahrfunktion in Abhängigkeit von den Fahrerdaten im automatischen Modus oder im manuellen Modus betrieben werden. So können die Sicherheit und/oder der Komfort der Fahrfunktion erhöht werden.

Fig. 5g zeigt ein Ablaufdiagramm eines beispielhaften (ggf. Computerimplementierten) Verfahrens 560 zur Bereitstellung einer Fahrfunktion (insbesondere der UCC Fahrfunktion) zur automatisierten Längsführung eines Fahrzeugs 100 an einer Signalisierungseinheit 200, 210.

Das Verfahren 560 umfasst, während des Betriebs der Fahrfunktion, das Detektieren 561 einer ersten Signalisierungseinheit 200, 210, die auf der von dem Fahrzeug 100 befahrenen Fahrbahn in Fahrtrichtung vor dem Fahrzeug 100 angeordnet ist. Des Weiteren umfasst das Verfahren 560 das Ermitteln 562 von Halteinformation in Bezug auf die zu erwartende Haltezeitdauer des Fahrzeugs 100 an der ersten Signalisierungseinheit 200, 210 und/oder in Bezug auf den Typ der ersten Signalisierungseinheit 200, 210 (und der damit verbundenen zu erwartenden Haltezeitdauer).

Außerdem umfasst das Verfahren 560 das Bewirken 563 einer automatisierten Verzögerung des Fahrzeugs 100 an der ersten Signalisierungseinheit 200, 210 in Abhängigkeit von der Halteinformation. Insbesondere kann der zeitliche Verlauf der Verzögerung in Abhängigkeit von der Halteinformation angepasst werden. So können der Komfort und/oder die Sicherheit der Fahrfunktion erhöht werden.

Fig. 5h zeigt ein Ablaufdiagramm eines beispielhaften (ggf. Computerimplementierten) Verfahrens 570 zur Bereitstellung einer Fahrfunktion (insbesondere der UCC Fahrfunktion) zur automatisierten Längsführung eines Fahrzeugs 100 an einer Signalisierungseinheit 200, 210. Das Verfahren 570 umfasst, während des Betriebs der Fahrfunktion, das Bestimmen 571, dass das Fahrzeug 100 an einer Signalisierungseinheit 200, 210 (insbesondere an einer roten Ampel) steht. Des Weiteren umfasst das Verfahren 570 das Erkennen 572, dass der Fahrer des Fahrzeugs 100 ein Bedienelement 411, 412, 413 (insbesondere eine Taste oder eine Wippe) der Benutzerschnittstelle 107 des Fahrzeugs 100 zur Steuerung der Fahrfunktion betätigt. Das Verfahren 570 umfasst ferner das Bewirken 573 eines automatisierten Anfahrens des Fahrzeugs 100 in Reaktion auf die erkannte Betätigung des Bedienelements 411, 412, 413. Es kann somit ein komfortables und sicheres Anfahren an einer Signalisierungseinheit 200, 210 ermöglicht werden.

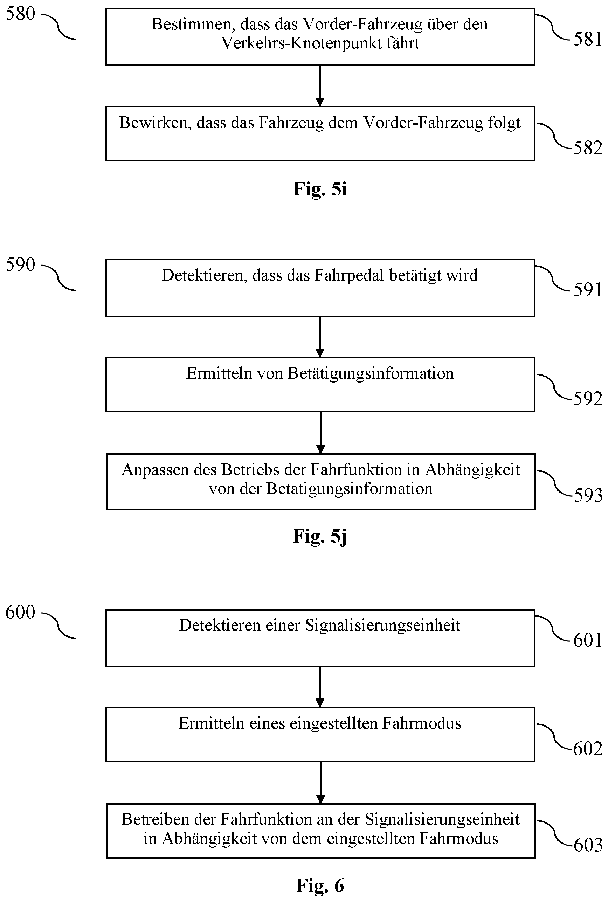

Fig. 5i zeigt ein Ablaufdiagramm eines beispielhaften (ggf. Computerimplementierten) Verfahrens 580 zur Bereitstellung einer Fahrfunktion (insbesondere der UCC Fahrfunktion) zur automatisierten Längsführung eines Fahrzeugs 100 an einer Signalisierungseinheit 200, 210.

Das Verfahren 580 umfasst, während des Betriebs der Fahrfunktion, das Bestimmen 581, auf Basis von Umfelddaten in Bezug auf ein (ggf. direkt) vor dem Fahrzeug 100 fahrendes Vorder-Fahrzeug, dass das Vorder-Fahrzeug über einen mit einer Signalisierungseinheit 200, 210 assoziierten Verkehrs-Knotenpunkt (insbesondere über eine Kreuzung) fährt. Das Vorder-Fahrzeug kann dabei auf der gleichen Fahrspur angeordnet sein wie das Fahrzeug 100.

Des Weiteren umfasst das Verfahren 580, in Reaktion auf das erkannte Fahren des Vorder-Fahrzeugs, das Bewirken 582, dass das Fahrzeug 100 auch dann automatisiert hinter dem Vorder-Fahrzeug her über den Verkehrs-Knotenpunkt geführt wird, wenn der Zustand der Signalisierungseinheit 200, 210 (insbesondere die Farbe der relevanten Signalgruppe 201) in Bezug auf die Erlaubnis für das Überfahren des Verkehrs-Knotenpunktes nicht eindeutig ermittelt werden kann. Durch die Berücksichtigung des Verhaltens des Vorder-Fahrzeugs können die Verfügbarkeit und somit der Komfort der Fahrfunktion erhöht werden.

Fig. 5j zeigt ein Ablaufdiagramm eines beispielhaften (ggf. Computerimplementierten) Verfahrens 590 zur Bereitstellung einer Fahrfunktion (insbesondere der UCC Fahrfunktion) zur automatisierten Längsführung eines Fahrzeugs 100 an einer Signalisierungseinheit 200, 210.

Das Verfahren 590 umfasst, während des Betriebs der Fahrfunktion, das Detektieren 591, dass das Fahrpedal des Fahrzeugs 100 betätigt wird. Des Weiteren umfasst das Verfahren 590 das Ermitteln 592 von Betätigungsinformation in Bezug auf die Betätigung des Fahrpedals und/oder in Bezug auf eine durch die Betätigung des Fahrpedals bewirkte Reaktion des Fahrzeugs 100. Das Verfahren 590 umfasst ferner das Anpassen 593, insbesondere das Fortführen oder Abbrechen, des Betriebs der Fahrfunktion in Abhängigkeit von der Betätigungsinformation. Dabei kann insbesondere durch die Betätigung des Fahrpedals in selektiver Weise (pro Signalisierungseinheit 200, 210) bewirkt werden, dass eine erkannte, vorausliegende, Signalisierungseinheit 200, 210 nicht bei der automatisierten Längsführung des Fahrzeugs 100 berücksichtigt wird (und das Fahrzeug 100 somit mit einer Abstands- und/oder Geschwindigkeitsregelung, insbesondere mit der ACC Fahrfunktion, an der erkannten Signalisierungseinheit 200, 210 vorbeigeführt wird). Durch die Berücksichtigung von Betätigungsinformation können die Verfügbarkeit und der Komfort der Fahrfunktion in sicherer Weise erhöht werden. Insbesondere kann so ein komfortables Übersteuern der Fahrfunktion (in selektiver Weise pro Signalisierungseinheit 200, 210) bewirkt werden.

Fig. 6 zeig ein Ablaufdiagramm eines weiteren beispielhaften (ggf. Computerimplementierten) Verfahrens 600 zur Bereitstellung einer Fahrfunktion zur automatisierten Längsführung eines Fahrzeugs 100 an einer Signalisierungseinheit 200, 210. Das Verfahren 600 umfasst, während des Betriebs der Fahrfunktion, das Detektieren 601 einer ersten Signalisierungseinheit 200, 210, die auf einer von dem Fahrzeug 100 befahrenen Fahrbahn in Fahrtrichtung vor dem Fahrzeug 100 angeordnet ist. Die Signalisierungseinheit 200, 210 kann z.B. auf Basis von Umfelddaten und/oder auf Basis von Kartendaten detektiert werden.

Des Weiteren umfasst das Verfahren 600 das Ermitteln 602 eines eingestellten Fahrmodus aus einer Mehrzahl von unterschiedlichen Fahrmodi des Fahrzeugs 100. Des Fahrmodus kann dabei von einem Nutzer, insbesondere von dem Fahrer, des Fahrzeugs eingestellt worden sein (z.B. über ein Bedienelement des Fahrzeugs). Die Mehrzahl von Fahrmodi kann z.B. einen Eco-Fahrmodus, einen Komfort-Fahrmodus und/oder einen Sport-Fahrmodus umfassen. Die unterschiedlichen Fahrmodi können ausgebildet sein, eine unterschiedliche Fahrdynamik des Fahrzeugs zu bewirken. Dabei kann die Fahrdynamik im Eco-Fahrmodus niedriger sein als im Komfort-Fahrmodus, und im Komfort-Fahrmodus niedriger als im Sport-Fahrmodus.

Das Verfahren 600 umfasst ferner das Bewirken 603 der automatisierten Längsführung des Fahrzeugs 100 bei einer Annäherung an die erste Signalisierungseinheit 200, 210, insbesondere bei einem Verzögerungsvorgang an der ersten Signalisierungseinheit 200, 210, in Abhängigkeit von dem eingestellten Fahrmodus. Durch die Berücksichtigung des eingestellten Fahrmodus bei dem Betrieb der UCC Fahrfunktion können die Sicherheit und der Komfort der Fahrfunktion erhöht werden.

In diesem Dokument werden unterschiedliche Aspekt einer Urban Cruise Control (UCC) Fahrfunktion beschrieben, durch die eine komfortable und sichere automatisierte Längsführung (gemäß SAE-Level 2) unter Berücksichtigung von Signalisierungseinheiten 200, 210 bereitgestellt wird.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Verfahren, Vorrichtungen und Systeme veranschaulichen sollen.

## Patentansprüche

1. Fahrzeugführungssystem (101) zur Bereitstellung einer Fahrfunktion zur automatisierten Längsführung eines Fahrzeugs (100) an einer Signalisierungseinheit (200, 210); wobei das Fahrzeugführungssystem (101) eingerichtet ist, während eines Betriebs der Fahrfunktion,
- auf Basis von Umfelddaten von ein oder mehreren Umfeldsensoren (103) des Fahrzeugs (100) eine erste Signalisierungseinheit (200, 210) zu detektieren, die auf einer von dem Fahrzeug (100) befahrenen Fahrbahn in Fahrtrichtung vor dem Fahrzeug (100) angeordnet ist;
- Fahrerdaten in Bezug auf die Aufmerksamkeit eines Fahrers des Fahrzeugs (100) bei einer Überwachung der Fahrfunktion zu ermitteln;
- die Fahrfunktion in Bezug auf die automatisierte Längsführung des Fahrzeugs (100) an der ersten Signalisierungseinheit (200, 210) in Abhängigkeit von den Fahrerdaten zu betreiben; und
- eine Verzögerung und/oder eine Beschleunigung, insbesondere einen zeitlichen Verlauf der Verzögerung und/oder der Beschleunigung, des Fahrzeugs (100) im Rahmen der automatisierten Längsführung des Fahrzeugs (100) an der ersten Signalisierungseinheit (200, 210) in Abhängigkeit von den Fahrerdaten zu bewirken;
**dadurch gekennzeichnet, dass** das Fahrzeugführungssystem (101) eingerichtet ist, einen Zeitpunkt eines Beginns einer automatisierten Verzögerung und/oder einen Verzögerungswert der automatisierten Verzögerung des Fahrzeugs (100) an der ersten Signalisierungseinheit (200, 210) in Abhängigkeit von den Fahrerdaten festzulegen.

2. Fahrzeugführungssystem (101) gemäß Anspruch 1, wobei das Fahrzeugführungssystem (101) eingerichtet ist, den Zeitpunkt und/oder den Verzögerungswert derart in Abhängigkeit von den Fahrerdaten zu ermitteln, dass
- der Zeitpunkt mit steigendem Grad der Aufmerksamkeit des Fahrers bei der Überwachung der Fahrfunktion zeitlich weiter nach hinten verschoben wird; und/oder
- der Verzögerungswert mit steigendem Grad der Aufmerksamkeit des Fahrers bei der Überwachung der Fahrfunktion erhöht wird.

3. Fahrzeugführungssystem (101) gemäß Anspruch 1, wobei das Fahrzeugführungssystem (101) eingerichtet ist, im Rahmen der automatisierten Längsführung des Fahrzeugs (100) an der ersten Signalisierungseinheit (200, 210) einen zeitlich isolierten Ruck zu bewirken, insbesondere an einem Beginn einer automatisierten Verzögerung an der ersten Signalisierungseinheit (200, 210), wenn die Fahrerdaten anzeigen, dass ein Grad der Aufmerksamkeit des Fahrers bei der Überwachung der Fahrfunktion kleiner als ein Aufmerksamkeits-Schwellenwert ist.

4. Fahrzeugführungssystem (101) gemäß einem der vorhergehenden Ansprüche, wobei das Fahrzeugführungssystem (101) eingerichtet ist,
- auf Basis der Umfelddaten zu bestimmen, dass die erste Signalisierungseinheit (200, 210) nicht bei der Fahrfunktion zur automatisierten Längsführung des Fahrzeugs (100) berücksichtigt werden kann; und
- in Reaktion darauf eine Nichtverfügbarkeitsausgabe an den Fahrer des Fahrzeugs (100) zu bewirken, um den Fahrer des Fahrzeugs (100) darüber zu informieren, dass die erste Signalisierungseinheit (200, 210) nicht bei der Fahrfunktion zur automatisierten Längsführung des Fahrzeugs (100) berücksichtigt wird; wobei die Nichtverfügbarkeitsausgabe von den Fahrerdaten, insbesondere von einem durch die Fahrerdaten angezeigten Grad der Aufmerksamkeit des Fahrers bei der Überwachung der Fahrfunktion, abhängt.

5. Fahrzeugführungssystem (101) gemäß Anspruch 4, wobei das Fahrzeugführungssystem (101) eingerichtet ist,
- nur eine optische Nichtverfügbarkeitsausgabe, insbesondere eine Nichtverfügbarkeitsanzeige, zu bewirken, wenn die Fahrerdaten anzeigen, dass der Grad der Aufmerksamkeit des Fahrers bei der Überwachung der Fahrfunktion größer als ein Aufmerksamkeits-Schwellenwert ist; und
- zusätzlich zu der optischen Nichtverfügbarkeitsausgabe eine akustische und/oder eine haptische Nichtverfügbarkeitsausgabe zu bewirken, wenn die Fahrerdaten anzeigen, dass der Grad der Aufmerksamkeit des Fahrers bei der Überwachung der Fahrfunktion kleiner als der Aufmerksamkeits-Schwellenwert ist.

6. Fahrzeugführungssystem (101) gemäß Anspruch 5, wobei das Fahrzeugführungssystem (101) eingerichtet ist,
- die optische Nichtverfügbarkeitsausgabe an einem Nichtverfügbarkeitszeitpunkt zu bewirken;
- auf Basis der Fahrerdaten den Grad der Aufmerksamkeit des Fahrers an dem Nichtverfügbarkeitszeitpunkt zu ermitteln; und
- auf Basis des Grads der Aufmerksamkeit des Fahrers an dem Nichtverfügbarkeitszeitpunkt zu entscheiden, ob zusätzlich zu der optischen Nichtverfügbarkeitsausgabe eine akustische und/oder eine haptische Nichtverfügbarkeitsausgabe bewirkt wird.

7. Fahrzeugführungssystem (101) gemäß einem der vorhergehenden Ansprüche, wobei das Fahrzeugführungssystem (101) eingerichtet ist,
- zu bestimmen, dass die Fahrfunktion eine Änderung eines Fahrverhaltens des Fahrzeugs (100) in Bezug auf die automatisierte Längsführung des Fahrzeugs (100) an der ersten Signalisierungseinheit (200, 210) bewirkt oder bewirken möchte; und
- in Abhängigkeit von den Fahrerdaten Information in Bezug auf die Änderung des Fahrverhaltens an den Fahrer des Fahrzeugs (100) auszugeben.

8. Fahrzeugführungssystem (101) gemäß Anspruch 7, wobei das Fahrzeugführungssystem (101) eingerichtet ist,
- auf Basis der Fahrerdaten zu bestimmen, ob ein Grad der Aufmerksamkeit des Fahrers bei der Überwachung der Fahrfunktion größer oder kleiner als ein Aufmerksamkeits-Schwellenwert; und
- die Information in Bezug auf die Änderung des Fahrverhaltens, insbesondere nur dann, an den Fahrer des Fahrzeugs (100) auszugeben, wenn bestimmt wird, dass der Grad der Aufmerksamkeit des Fahrers kleiner als der Aufmerksamkeits-Schwellenwert ist.

9. Fahrzeugführungssystem (101) gemäß einem der Ansprüche 7 bis 8, wobei das Fahrzeugführungssystem (101) eingerichtet ist,
- auf Basis der Umfelddaten zu bestimmen, dass sich eine Farbe einer Signalgruppe (201) der ersten Signalisierungseinheit (200, 210) geändert hat; und
- in Reaktion darauf zu bestimmen, dass die Fahrfunktion eine Änderung des Fahrverhaltens des Fahrzeugs (100) in Bezug auf die automatisierte Längsführung des Fahrzeugs (100) an der ersten Signalisierungseinheit (200, 210) bewirkt oder bewirken möchte, insbesondere um eine automatisierte Verzögerung an der ersten Signalisierungseinheit (200, 210) zu beenden oder zu beginnen.

10. Fahrzeugführungssystem (101) gemäß einem der Ansprüche 7 bis 9, wobei das Fahrzeugführungssystem (101) eingerichtet ist,
- an einem Änderungszeitpunkt, an dem die erste Signalisierungseinheit (200, 210) bereits bei der automatisierten Längsführung des Fahrzeugs (100) berücksichtigt wird, zu bestimmen, dass die Fahrfunktion eine Änderung eines Fahrverhaltens des Fahrzeugs (100) bewirkt oder bewirken möchte; und
- Fahrerdaten in Bezug auf einen Grad der Aufmerksamkeit des Fahrers bei der Überwachung der Fahrfunktion an dem Änderungszeitpunkt zu ermitteln.

11. Verfahren (550) zur Bereitstellung einer Fahrfunktion zur automatisierten Längsführung eines Fahrzeugs (100) an einer Signalisierungseinheit (200, 210); wobei das Verfahren (550) während eines Betriebs der Fahrfunktion umfasst,
- Detektieren (551), auf Basis von Umfelddaten von ein oder mehreren Umfeldsensoren (103) des Fahrzeugs (100), einer ersten Signalisierungseinheit (200, 210), die auf einer von dem Fahrzeug (100) befahrenen Fahrbahn in Fahrtrichtung vor dem Fahrzeug (100) angeordnet ist;
- Ermitteln (552) von Fahrerdaten in Bezug auf die Aufmerksamkeit eines Fahrers des Fahrzeugs (100) bei einer Überwachung der Fahrfunktion;
- Betreiben (553) der Fahrfunktion in Bezug auf die automatisierte Längsführung des Fahrzeugs (100) an der ersten Signalisierungseinheit (200, 210) in Abhängigkeit von den Fahrerdaten; und
- Bewirken einer Verzögerung und/oder einer Beschleunigung, insbesondere eines zeitlichen Verlaufs der Verzögerung und/oder der Beschleunigung, des Fahrzeugs (100) im Rahmen der automatisierten Längsführung des Fahrzeugs (100) an der ersten Signalisierungseinheit (200, 210) in Abhängigkeit von den Fahrerdaten;
**dadurch gekennzeichnet, dass** das Verfahren (550) umfasst,
- Festlegen eines Zeitpunkts eines Beginns einer automatisierten Verzögerung und/oder eines Verzögerungswerts der automatisierten Verzögerung des Fahrzeugs (100) an der ersten Signalisierungseinheit (200, 210) in Abhängigkeit von den Fahrerdaten.
